# EUROPEAN PATENT SPECIFICATION

(11) **EP 4 564 979 B1**
(45) Date of publication and mention of the grant of the patent: **25.11.2026**
(21) Application number: 23856276.3
(22) Date of filing: 28.06.2023
(51) Int. Cl.: H04W 72/25, G06K 7/10, G06K 19/07, H04B 7/145, H04B 7/22, H04W 52/02, H04W 72/23

(54) **COMMUNICATION METHOD AND APPARATUS**
KOMMUNIKATIONSVERFAHREN UND -VORRICHTUNG
PROCÉDÉ ET APPAREIL DE COMMUNICATION

(30) Priority: 25.08.2022 CN 202211029905
(43) Date of publication of application: 04.06.2025
(73) Proprietor: Huawei Technologies Co., Ltd., Shenzhen, Guangdong 518129 (CN)
(72) Inventor: SUN, Huan, Shenzhen, Guangdong 518129 (CN); JIN, Zhe, Shenzhen, Guangdong 518129 (CN); LUO, Zhihu, Shenzhen, Guangdong 518129 (CN); HOU, Hailong, Shenzhen, Guangdong 518129 (CN); QU, Weilin, Shenzhen, Guangdong 518129 (CN)
(74) Representative: Isarpatent
(86) International application number: PCT/CN2023/103501
(87) International publication number: WO 2024/041185

(56) References cited:
- WO-A1-2021/097597
- WO-A1-2022/033425
- WO-A1-2022/033425
- WO-A1-2022/141400
- CN-A- 107 786 255
- CN-A- 114 095 977
- CN-A- 114 731 498
- US-A1- 2016 374 016
- US-A1- 2022 278 886
- US-A1- 2023 180 346
- US-A1- 2023 342 567

## Description

### TECHNICAL FIELD

The present disclosure relates to the communication field, and in particular, the invention relates to communication methods, apparatus and computer-readable storage medium.

### BACKGROUND

Enhanced mobile broadband (eMBB), ultra-reliable low-latency communication (URLLC), and massive internet of things communication (mMTC) are three application scenarios of 5th generation (5G) new radio (NR).

Currently, terminal forms in an NR network include an eMBB terminal applicable to an eMBB service and a reduced capability (RedCap) terminal (also referred to as a narrowband terminal) applicable to an mMTC service. The eMBB terminal and the RedCap terminal are usually powered by batteries or may be connected to wall-mounted power supplies, and can actively generate carriers. Therefore, the eMBB terminal and the RedCap terminal are active terminals.

In addition, there is another type of terminal in a local area network, that is, a passive terminal. The passive terminal cannot actively generate a carrier. When the passive terminal sends a signal, a device that specially generates a carrier needs to provide a carrier signal for the passive terminal. For example, in a radio frequency identification (radio frequency identification, RFID) technology, an electronic tag relies on a reader (reader) to provide an excitation signal as a carrier for sending a signal.

With development of communication technologies and diversification of communication requirements, the active terminal and the passive terminal may coexist in a same network. For example, the passive terminal may be introduced in the NR network. How to perform communication in this scenario is an urgent problem to be resolved.

WO 2022/033425 A1 / US 2023/0180346 A1 relates to a DTX scheme for a reader-type device that transmits an RF signal to a second device so that the second device can collect energy from that signal, and more particularly to network-assisted configuration of such discontinuous transmission so as to reduce the power consumption burden associated with continuous excitation in backscatter-type scenarios.

WO 2021/097597 A1 / US 2022/0278886 A1 relates to a backscatter-type signal transmission scheme involving an exciter, a reflector and a receiver, and more particularly to structuring excitation signals so that the receiver can improve channel estimation and demodulation of reflected data and reference signals.

WO 2022/141400 A1 / US 2023/0342567 A1 relates to interference management in RFID-type environments where multiple reader devices operate in proximity of a tag, and more particularly to a "listening" procedure in which a network device schedules a listening resource for a reader so that the reader transmits a listening signal and listens to other readers to derive a listening result, thereby reducing mutual interference.

### SUMMARY

The object of the present invention is to provide communication methods, apparatus, and computer-readable storage medium to improve uplink sending performance of a passive terminal, or improve downlink receiving performance of an active terminal. This object is solved by the attached independent claims and further embodiments and improvements of the invention are listed in the attached dependent claims. Hereinafter, up to the "brief description of the drawings", expressions like "...aspect according to the invention", "according to the invention", or "the present invention", relate to technical teaching of the broadest embodiment as claimed with the independent claims. Expressions like "implementation", "design", "optionally", "preferably", "scenario", "aspect" or similar relate to further embodiments as claimed, and expressions like "example", "...aspect according to an example", "the disclosure describes", or "the disclosure" describe technical teaching which relates to the understanding of the invention or its embodiments, which, however, is not claimed as such.

According to a first aspect according to the invention, a communication method is provided. The method may be performed by a network device; may be performed by a component of the network device, for example, a processor, a chip, or a chip system of the network device; or may be implemented by a logical module or software that can implement all or some functions of the network device. That the network device performs the method is used as an example. The method includes: The network device generates first signaling, and sends the first signaling to a first terminal. The first signaling indicates the first terminal to send a first signal to a second terminal, and the first signal is used to provide a carrier for the second terminal.

Based on this solution, the network device can indicate the first terminal to send the first signal to the second terminal, to provide the carrier or energy for the second terminal. When the first signal is used to provide the carrier, even if the second terminal is located at a cell edge, a power of a downlink signal sent by the network device when the downlink signal arrives at the second terminal is extremely low, and the second terminal can still perform uplink sending based on the first signal sent by the first terminal. When the first terminal is close to the second terminal, the first signal sent by the first terminal still has a high power when arriving at the second terminal, and therefore a reflected signal that is of the first signal and that is sent by the second terminal may also have a high power. In this way, uplink sending performance of the second terminal is improved.

In the invention, the first signaling further indicates a first resource and/or a second resource. The first resource is used to carry the first signal, and the second resource is used to carry control signaling sent by the first terminal to the second terminal.

In the invention, the first signaling further indicates a duplex mode for communication between the first terminal and the second terminal, and/or a transmit power of the first signal.

Based on this possible design, when the first signaling further indicates the transmit power of the first signal, the network device may indicate the first terminal to send the first signal at a high transmit power, so that the first signal still has a high power when arriving at the second terminal, and therefore the reflected signal of the first signal also has a high power. In this way, the uplink sending performance of the second terminal is effectively improved. Alternatively, the second terminal stores a large amount of energy based on the first signal.

In a possible design, the first signaling further indicates at least one of the following: the second terminal sends a reflected signal of the first signal, and the reflected signal does not include information about the second terminal; the second terminal sends a reflected signal of the first signal, and the reflected signal includes information about the second terminal; or the second terminal does not send a reflected signal of the first signal.

In a possible design, the method further includes: The network device sends signaling A, where the signaling A indicates at least one of the following: the second terminal sends the reflected signal of the first signal, and the reflected signal does not include the information about the second terminal; the second terminal sends the reflected signal of the first signal, and the reflected signal includes the information about the second terminal; or the second terminal does not send the reflected signal of the first signal. The signaling A is different from the first signaling.

Based on this possible design, the second terminal can send the reflected signal of the first signal based on a configuration of the network device, so that the second terminal and the network device have a consistent understanding of information included in the reflected signal. In this way, the network device can accurately demodulate the reflected signal, and therefore communication efficiency is improved.

In the invention, the first signaling includes first information, and the first information identifies the second terminal.

Based on this possible design, second signaling carries the first information that identifies the second terminal, so that a passive terminal can determine whether the second signaling is sent to the passive terminal, and another passive terminal other than the second terminal can discard the second signaling or do not respond to the second signaling when receiving the second signaling. In this way, signaling and power consumption waste of the another passive terminal is reduced.

In a possible design, the method further includes: The network device receives the reflected signal of the first signal from the second terminal. Alternatively, the network device receives a second signal from the first terminal, where the second signal includes the first information that identifies the second terminal.

According to a second aspect according to the invention, a communication method is provided. The method may be performed by a first terminal; may be performed by a component of the first terminal, for example, a processor, a chip, or a chip system of the first terminal; or may be implemented by a logical module or software that can implement all or some functions of the first terminal. That the first terminal performs the method is used as an example. The method includes: The first terminal receives first signaling from a network device, where the first signaling indicates the first terminal to send a first signal to a second terminal. The first terminal sends, to the second terminal, second signaling that indicates a third resource, and sends a first signal to the second terminal on the third resource, where the first signal is used to provide a carrier or energy for the second terminal.

Based on this solution, the first terminal sends the first signal to the second terminal based on an indication of the network device, to provide the carrier or energy for the second terminal. When the first signal is used to provide the carrier, even if the second terminal is located at a cell edge, a power of a downlink signal sent by the network device when the downlink signal arrives at the second terminal is extremely low, and the second terminal can still perform uplink sending based on an excitation signal sent by the first terminal. When the first terminal is close to the second terminal, the excitation signal sent by the first terminal still has a high power when arriving at the second terminal, and therefore a reflected signal that is of the excitation signal and that is sent by the second terminal may also have a high power. In this way, uplink sending performance of the second terminal is improved. When the first signal is used to provide the energy, the second terminal can store the energy based on the first signal, to ensure sufficient energy for a subsequent operation.

In a possible design, the second signaling further indicates at least one of the following: the second terminal sends a reflected signal of the first signal, and the reflected signal does not include information about the second terminal; the second terminal sends a reflected signal of the first signal, and the reflected signal includes information about the second terminal; or the second terminal does not send a reflected signal of the first signal.

In a possible design, the method further includes: The first terminal sends signaling B to the second terminal, where the signaling B indicates at least one of the following: the second terminal sends the reflected signal of the first signal, and the reflected signal does not include the information about the second terminal; the second terminal sends the reflected signal of the first signal, and the reflected signal includes the information about the second terminal; or the second terminal does not send the reflected signal of the first signal. The signaling B is different from the second signaling.

In a possible design, there is an interval of first duration between a time domain position occupied by the second signaling and a time domain position occupied by the first signal.

Based on this possible design, when a duplex mode for communication between the first terminal and the second terminal is HD-FDD, the frequency domain position occupied by the second signaling belongs to a downlink spectrum, and the frequency domain position occupied by the first signal belongs to an uplink spectrum, the first duration may be used by the first terminal to perform spectrum switching, to ensure that the first terminal successfully sends the first signal.

In a possible design, the first signaling further indicates a first resource, and the first resource is used to carry the first signal. The method further includes: The first terminal determines the third resource based on the first signaling, where the third resource is a part or all of the first resource.

In a possible design, the first signaling further indicates a resource used to carry the second signaling.

In a possible design, the first signaling further indicates a transmit power of the first signal.

In a possible design, the second signaling includes first information, and the first information identifies the second terminal.

In a possible design, when the second signaling further indicates that the second terminal sends the reflected signal of the first signal, and the reflected signal includes the information about the second terminal, the method further includes: The first terminal receives the reflected signal of the first signal from the second terminal, and determines, based on signal strength of the reflected signal and/or position information of the second terminal, whether to forward the reflected signal.

Based on this possible design, the first terminal may forward the reflected signal when the signal strength of the reflected signal is small and/or the second terminal is far from the network device. In this way, uplink coverage performance of the second terminal is further improved. Alternatively, the first terminal may not forward the reflected signal when the signal strength of the reflected signal is large and/or the second terminal is close to the network device. In this way, power consumption of the first terminal is reduced.

According to a third aspect not claimed, a communication method is provided. The method may be performed by a second terminal; may be performed by a component of the second terminal, for example, a processor, a chip, or a chip system of the second terminal; or may be implemented by a logical module or software that can implement all or some functions of the second terminal. That the second terminal performs the method is used as an example. The method includes: The second terminal receives, from a first terminal, second signaling that indicates a third resource, and receives a first signal from the first terminal on the third resource, where an excitation signal is used to provide a carrier or energy for the second terminal.

Based on this solution, the second terminal may obtain the carrier or energy from the first terminal. When the first signal is used to provide the carrier, even if the second terminal is located at a cell edge, a power of a downlink signal sent by a network device when the downlink signal arrives at the second terminal is extremely low, and the second terminal can still perform uplink sending based on an excitation signal sent by the first terminal. When the first terminal is close to the second terminal, the excitation signal sent by the first terminal still has a high power when arriving at the second terminal, and therefore a reflected signal that is of the excitation signal and that is sent by the second terminal may also have a high power. In this way, uplink sending performance of the second terminal is improved. When the first signal is used to provide the energy, the second terminal can store the energy based on the first signal, to ensure sufficient energy for a subsequent operation.

In a possible design, the second signaling further indicates at least one of the following: the second terminal sends a reflected signal of the first signal, and the reflected signal does not include information about the second terminal; the second terminal sends a reflected signal of the first signal, and the reflected signal includes information about the second terminal; or the second terminal does not send a reflected signal of the first signal.

In a possible design, there is an interval of first duration between a time domain position occupied by the second signaling and a time domain position occupied by the first signal.

In a possible design, the second signaling includes first information, and the first information identifies the second terminal.

For technical effect brought by any design in the third aspect, refer to the technical effect brought by a corresponding design in the first aspect or the second aspect. Details are not described herein again.

According to a fourth aspect not claimed, a communication method is provided. The method may be performed by a communication device; may be performed by a component of the communication device, for example, a processor, a chip, or a chip system of the communication device; or may be implemented by a logical module or software that can implement all or some functions of the communication device. The communication device may be a network device or a first terminal. That the communication device performs the method is used as an example. The method includes: The communication device generates third signaling and sends the third signaling to a second terminal, where the third signaling indicates at least one of the following: the second terminal sends a reflected signal of a third signal, and the reflected signal does not include information about the second terminal; the second terminal sends a reflected signal of a third signal, and the reflected signal includes information about the second terminal; or the second terminal does not send a reflected signal of a third signal.

Based on this solution, the communication device may indicate a response of the second terminal to the third signal, for example, sending or non-sending of the reflected signal of the third signal, and whether the reflected signal includes the information about the second terminal. Therefore, the communication device can flexibly control the second terminal based on an actual situation, an application scenario, and the like. For example, when the third signal is a downlink signal between the network device and the first terminal, the third signaling may indicate that the second terminal sends the reflected signal of the third signal, and the reflected signal does not include the information about the second terminal, so that the second terminal provides a plurality of paths for the downlink signal, and the first terminal can receive a superimposed signal of downlink signals that arrive at the first terminal on the plurality of paths. In this way, a power and quality of the downlink signal that arrives at the first terminal is improved, and downlink receiving performance of the first terminal is improved.

In a possible design, the third signaling further indicates a resource used to carry the third signal.

In a possible design, the third signaling includes first information, and the first information identifies the second terminal.

In a possible design, when the third signaling indicates that the second terminal sends the reflected signal of the third signal, and the reflected signal does not include the information about the second terminal, the method further includes: The network device receives a measurement report from the first terminal, where the measurement report indicates signal quality of a reference signal measured by the first terminal. The network device determines, based on the measurement report, whether to send the third signaling.

According to a fifth aspect not claimed, a communication method is provided. The method may be performed by a second terminal; may be performed by a component of the second terminal, for example, a processor, a chip, or a chip system of the second terminal; or may be implemented by a logical module or software that can implement all or some functions of the second terminal. That the second terminal performs the method is used as an example. The method includes: The second terminal receives third signaling from a communication device, where the third signaling indicates at least one of the following: the second terminal sends a reflected signal of a third signal, and the reflected signal does not include information about the second terminal; the second terminal sends a reflected signal of a third signal, and the reflected signal includes information about the second terminal; or the second terminal does not send a reflected signal of a third signal. The second terminal receives the third signal.

Based on this solution, the second terminal can respond to the third signal based on an indication of the communication device. When the third signal is a downlink signal between a network device and a first terminal, the third signaling may indicate the second terminal to send the reflected signal of the third signal, and the information about the second terminal is not included in the reflected signal, so that the second terminal provides a plurality of paths for the downlink signal, and the first terminal can receive a superimposed signal of downlink signals that arrive at the first terminal on the plurality of paths. In this way, a power and quality of the downlink signal that arrives at the first terminal is improved, and downlink receiving performance of the first terminal is improved.

In a possible design, the third signaling further indicates a resource used to carry the third signal.

In a possible design, the third signaling includes first information, and the first information identifies the second terminal.

According to a sixth aspect according to the invention, a communication apparatus configured to implement the methods is provided. The communication apparatus may be the network device in the first aspect; or an apparatus included in the network device, for example, a chip or a chip system. Alternatively, the communication apparatus may be the first terminal in the second aspect; or an apparatus included in the first terminal, for example, a chip or a chip system. The communication apparatus includes a corresponding module, unit, or means for implementing the methods. The module, unit, or means may be implemented by hardware, software, or hardware executing corresponding software. The hardware or the software includes one or more modules or units corresponding to functions.

In some possible designs, the communication apparatus may include a processing module and a transceiver module. The processing module may be configured to implement a processing function in any one of the foregoing aspects and the possible implementations thereof. The transceiver module may include a receiving module and a sending module that are respectively configured to implement a receiving function and a sending function in any one of the foregoing aspects and the possible implementations thereof.

In some possible designs, the transceiver module may include a transceiver circuit, a transceiver, a transceiver machine, or a communication interface.

According to a seventh aspect not claimed, a communication apparatus is provided. The apparatus includes a processor and a memory. The memory is configured to store computer instructions. When the processor executes the instructions, the communication apparatus is enabled to perform the method according to any one of the foregoing aspects. The communication apparatus may be the network device in the first aspect or the fourth aspect; or an apparatus included in the network device, for example, a chip or a chip system. Alternatively, the communication apparatus may be the first terminal in the second aspect; or an apparatus included in the first terminal, for example, a chip or a chip system. Alternatively, the communication apparatus may be the second terminal in the third aspect or the fifth aspect; or an apparatus included in the second terminal, for example, a chip or a chip system.

According to an eighth aspect not claimed, a communication apparatus is provided. The apparatus includes a processor and a communication interface. The communication interface is configured to communicate with a module outside the communication apparatus. The processor is configured to execute a computer program or instructions, to enable the communication apparatus to perform the method according to any one of the foregoing aspects. The communication apparatus may be the network device in the first aspect or the fourth aspect; or an apparatus included in the network device, for example, a chip or a chip system. Alternatively, the communication apparatus may be the first terminal in the second aspect; or an apparatus included in the first terminal, for example, a chip or a chip system. Alternatively, the communication apparatus may be the second terminal in the third aspect or the fifth aspect; or an apparatus included in the second terminal, for example, a chip or a chip system.

According to a ninth aspect not claimed, a communication apparatus is provided. The apparatus includes at least one processor. The processor is configured to execute a computer program or instructions stored in a memory, to enable the communication apparatus to perform the method according to any one of the foregoing aspects. The memory may be coupled to the processor, or may be independent of the processor. The communication apparatus may be the network device in the first aspect or the fourth aspect; or an apparatus included in the network device, for example, a chip or a chip system. Alternatively, the communication apparatus may be the first terminal in the second aspect; or an apparatus included in the first terminal, for example, a chip or a chip system. Alternatively, the communication apparatus may be the second terminal in the third aspect or the fifth aspect; or an apparatus included in the second terminal, for example, a chip or a chip system.

According to a tenth aspect according to the invention, a computer-readable storage medium is provided. The computer-readable storage medium stores a computer program or instructions. When the computer program or instructions are run on a communication apparatus, the communication apparatus is enabled to perform the method according to any one of the foregoing aspects.

According to an eleventh aspect not claimed, a computer program product including instructions is provided. When the computer program product runs on a communication apparatus, the communication apparatus is enabled to perform the method according to any one of the foregoing aspects.

According to a twelfth aspect not claimed, a communication apparatus (where for example, the communication apparatus may be a chip or a chip system) is provided. The communication apparatus includes a processor, configured to implement the function in any one of the foregoing aspects.

In some possible designs, the communication apparatus includes a memory, and the memory is configured to store necessary program instructions and data.

In some possible designs, when the apparatus is a chip system, the apparatus may include a chip, or may include a chip and another discrete component.

It may be understood that, when the communication apparatus provided in any one of the sixth aspect to the twelfth aspect is a chip, a sending action/function of the communication apparatus may be understood as information output, and a receiving action/function of the communication apparatus may be understood as information input.

For technical effect brought by any design manner of the sixth aspect to the twelfth aspect, refer to the technical effect brought by different design manners in the first aspect, the second aspect, the third aspect, the fourth aspect, or the fifth aspect. Details are not described herein again.

### BRIEF DESCRIPTION OF DRAWINGS

FIG. 1 is a schematic flowchart of selecting, inventorying, and accessing a tag by a reader according to this application;
FIG. 2 is a diagram of a structure of a communication system according to this application;
FIG. 3a is a diagram of a structure of a network device according to this application;
FIG. 3b is a diagram of a structure of another network device according to this application;
FIG. 4 is a schematic flowchart of a communication method according to this application;
FIG. 5 is a diagram of a time sequence of interaction between a network device, a first terminal, and a second terminal according to this application;
FIG. 6 is a schematic flowchart of another communication method according to this application;
FIG. 7 is a diagram of another time sequence of interaction between a network device, a first terminal, and a second terminal according to this application;
FIG. 8 is a schematic flowchart of still another communication method according to this application;
FIG. 9 is a diagram of a structure of a communication apparatus according to this application;
FIG. 10 is a diagram of a structure of another communication apparatus according to this application; and
FIG. 11 is a diagram of a structure of still another communication apparatus according to this application.

### DESCRIPTION OF EMBODIMENTS

Unless otherwise specified, "/" in descriptions of this application represents an "or" relationship between associated objects. For example, A/B may represent A or B. In this application, "and/or" describes only an association relationship between associated objects and represents that three relationships may exist. For example, A and/or B may represent the following three cases: Only A exists, both A and B exist, and only B exists. A and B may be singular or plural.

In the descriptions of this application, unless otherwise specified, "a plurality of" means two or more than two. "At least one of the following items (pieces)" or a similar expression thereof refers to any combination of these items, including any combination of singular items (pieces) or plural items (pieces). For example, at least one of a, b, or c may indicate: a, b, c, a and b, a and c, b and c, or a, b, and c, where a, b, and c may be singular or plural.

In addition, to clearly describe technical solutions in embodiments of this application, terms such as "first" and "second" are used in embodiments of this application to distinguish between same items or similar items that provide basically same functions and purposes. A person skilled in the art may understand that the terms such as "first" and "second" do not limit a quantity or an execution sequence, and the terms such as "first" and "second" do not indicate a definite difference.

In embodiments of this application, the term "example", "for example", or the like is used to represent giving an example, an illustration, or a description. Any embodiment or design scheme described with "example" or "for example" in embodiments of this application should not be explained as being more preferred or having more advantages than another embodiment or design scheme. Exactly, use of the term "example", "for example", or the like is intended to present a related concept in a specific manner for ease of understanding.

It may be understood that, an "embodiment" mentioned throughout this specification means that particular features, structures, or characteristics related to the embodiment are included in at least one embodiment of this application. Therefore, embodiments in the entire specification do not necessarily refer to a same embodiment. In addition, these particular features, structures, or characteristics may be combined in one or more embodiments in any appropriate manner. It may be understood that sequence numbers of processes do not mean execution sequences in embodiments of this application. The execution sequences of the processes should be determined based on functions and internal logic of the processes, and should not constitute any limitation on implementation processes of embodiments of this application.

It may be understood that in some scenarios, some optional features in embodiments of this application may be independently implemented without depending on another feature, for example, a solution on which the optional features are currently based, to resolve a corresponding technical problem and achieve corresponding effect. Alternatively, in some scenarios, the optional features may be combined with another feature based on a requirement. Correspondingly, the apparatus provided in embodiments of this application may also correspondingly implement these features or functions. Details are not described herein.

In this application, unless otherwise specified, for same or similar parts of embodiments, refer to each other. In embodiments of this application, unless otherwise specified or a logical conflict occurs, terms and/or descriptions in different embodiments are consistent and may be referenced by each other, and different embodiments may be combined based on an internal logical relationship between the embodiments to form a new embodiment. The following implementations of this application are not intended to limit the protection scope of this application.

For ease of understanding the technical solutions in embodiments of this application, conventional technologies of this application are first briefly described below.
1. Half-duplex (half-duplex, HD) mode:
   A mobile communication system in the half-duplex mode allows bidirectional data transmission between two communication devices, but receiving and sending cannot be performed at the same time.

Further, half-duplex may be classified into HD-time division duplex (time division duplex, TDD) and HD-frequency division duplex (frequency division duplex, FDD). In an HD-TDD mode, receiving and sending of a communication device are performed at different time on a same frequency domain resource, or receiving and sending of a communication device are performed at different time on different frequency domain resources. In an HD-FDD mode, receiving and sending of a communication device are performed at different time on different frequency domain resources.

### 2. New radio (new radio, NR):

5th generation (5th generation, 5G) mobile communication technology (mobile communication technology) NR is a next-generation broadband mobile communication technology that features a high rate, a low latency, and massive connections, and is a network infrastructure for implementing human-machine-thing interconnection.

The international telecommunication union (international telecommunication union, ITU) defines three application scenarios of 5G: enhanced mobile broadband (enhanced mobile broadband, eMBB), ultra-reliable low-latency communication (ultra-reliable low-latency communication, URLLC), and massive internet of things communication (massive machine-type communication, mMTC).

eMBB is directly evolved from mobile broadband services, and supports larger data traffic and further enhanced user experience, for example, supports a higher end-user data rate. URLLC requires an ultra-low latency and ultrahigh reliability, and is mainly applied to services such as transportation safety, automatic control, and factory automation. mMTC is mainly oriented to a smart city, a smart home, environment monitoring, and the like, including, for example, a video surveillance (Video Surveillance) service, a wearables (Wearables) service, and a service in an industrial wireless sensor network (industrial wireless sensor network, IWSN) that targets sensing and data collection. Usually, a process in which a terminal sends a signal includes a baseband processing process and a radio frequency processing process. In the baseband processing process, the terminal modulates an original bit to a baseband low-frequency signal. In the radio frequency processing process, the terminal loads the baseband low-frequency signal to a high-frequency carrier, and sends the signal through an antenna.

A conventional terminal in a cellular network is usually powered by a battery or may be connected to a power supply, and can actively generate a (high-frequency) carrier in a signal sending process.

In addition, in a local area network, there is one type of terminal that cannot actively generate a carrier. When sending a signal to the outside, the terminal requires another device to provide a carrier for the terminal. For example, a passive tag in radio frequency identification (radio frequency identification, RFID) is a terminal of this type.

For example, in this application, that a device A provides a carrier for a device B may be understood as follows: The device A sends a signal to the device B. When sending information, the device B may modulate the information of the device B to the signal for sending.

In this application, for ease of description, a terminal that can actively generate a carrier is referred to as an active terminal, and a terminal that cannot actively generate a carrier or a terminal that requires another device to provide a carrier is referred to as a passive terminal. Certainly, these two types of terminals may also have other names. This is not specifically limited in this application.

### 3. RFID:

An RFID technology is a non-contact automatic identification technology. An RFID system usually includes a reader (Reader) and a tag (Tag).

The tag is an RFID tag. Tags may be classified into a passive tag, a semi-active tag, and an active tag. For the passive tag, working energy of the passive tag is provided by a reader. For example, a part of energy of a continuous wave (continuous wave, CW) sent by the reader is used for internal processing such as encoding/decoding and modulation/demodulation of the tag. In addition, the continuous wave is further used as a carrier to carry uplink information of the tag. For a semi-passive tag, a battery may be included inside the semi-passive tag. Internal processing such as encoding/decoding and modulation/demodulation may be powered by the battery, but a continuous wave of a reader still needs to be used as a carrier. Unless otherwise specified, a tag in the following embodiments of this application refers to a passive tag or a semi-active tag.

The reader is a device having a read/write function, and may be, for example, a device for reading or writing tag information. Alternatively, the reader may be understood as a device communicating with the tag.

In the RFID technology, the reader may perform operations such as selection (selection), inventory (inventory), and access (access) on the tag. The selection operation is used to select one tag or a group of tags for inventory and access. The inventory operation may be understood as a process in which the reader identifies the tag. The access operation may be understood as a process in which the reader interacts with the tag. The tag needs to be identified by the reader before being accessed.

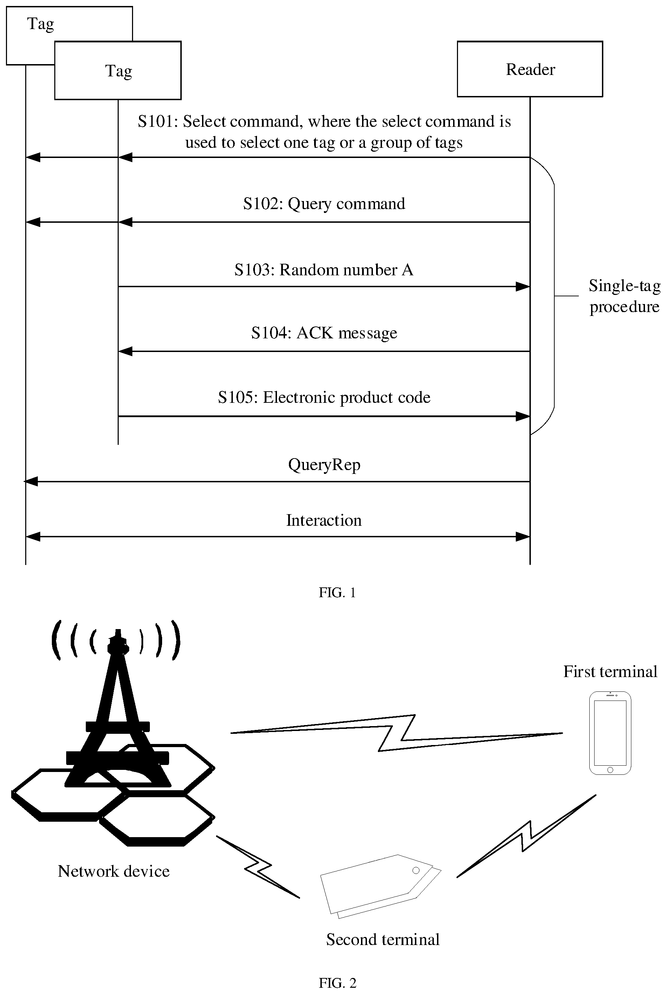

For example, a procedure in which the reader performs selection, inventory, and access on the tag may be shown in FIG. 1. With reference to FIG. 1, the procedure includes the following steps.

S101: A reader sends a select (select) command. The select command may be used to select one tag or a group of tags.

For example, the select command may include memory information, and a tag whose data stored in a storage area indicated by the memory information is consistent with a mask value is a tag selected by using the select command. The mask value may be indicated in the select command.

S102: The reader sends a query command.

The query command may indicate a type of inventory flag (that is, Sx, where x may be 0, 1, 2, or 3) and a status X (where X may be A or B) of the inventory flag, to indicate that the reader selects the inventory flag Sx whose status is X in the tag to participate in inventory and access.

For a plurality of tags selected by the reader, inventory and access are performed in a time division multiplexing manner. To be specific, after completing performing inventory and access on a tag, the reader starts to perform inventory and access on a next tag. The following steps are described by using inventory and access on one tag as an example.

S103: The tag sends a random number (random number, RN) A. For example, the random number A may be a 16-bit random number (RN16).

If a tag matches selection of the reader, or is the tag selected by the reader, and a status of an inventory flag Sx of the tag is consistent with the status of the inventory flag Sx indicated by the query command, after receiving the query command, the tag may generate a random number B based on a parameter Q indicated by the query command. Then, each time the tag receives a QueryRep command, the tag reduces the random number B by 1. When the random number B is reduced to 0, the tag sends the random number A.

In addition, after receiving the query command, the tag may reverse the status of the inventory flag Sx. For example, when X is A, the tag updates the status of the inventory flag Sx from A to B, to avoid repeated inventory by the reader.

S104: If successfully receiving the random number A, the reader sends an acknowledgment (acknowledgment, ACK) message. The message includes the random number A.

After receiving, within specified time, the acknowledgment message that carries the random number A sent by the tag, the tag may perform the following step S105.

S105: The tag sends an electronic product code (electronic product code, EPC).

Optionally, after step S105, the reader may send an instruction to the tag, perform an operation such as reading or writing on the tag, and interact with the tag. After receiving the instruction, the tag may respond to the instruction.

After completing performing inventory and access on the current tag, the reader may send a QueryRep command to start to perform inventory and access on a next tag.

With development of communication technologies and diversification of communication requirements, use of RFID and evolved technologies of RFID in a cellular network becomes an important research direction. For example, a base station may serve as a reader in RFID to provide a carrier or energy for a tag, and perform operations such as reading and writing on the tag. In other words, both an active terminal and a passive terminal may exist in the cellular network.

For example, communication between the base station and the active terminal may be classified into downlink transmission and uplink transmission. The downlink transmission may be signal transmission from the base station to the active terminal, and the uplink transmission may be signal transmission from the active terminal to the base station. The uplink transmission and the downlink transmission may include transmission on control channels and data channels. After a random access process, the base station may send downlink control signaling to the active terminal on a downlink control channel, and the active terminal may obtain, based on the downlink control signaling, information on a downlink data channel and a time-frequency resource for uplink sending. The active terminal may send uplink control signaling to the base station on an uplink control channel, and the base station may obtain information on an uplink data channel based on the uplink control signaling.

For example, communication between the base station and the passive terminal may also be classified into two parts: downlink transmission and uplink transmission. After the base station establishes a connection to the passive terminal, the base station may send a downlink signal to the passive terminal. For the uplink transmission, the base station needs to provide a carrier for the passive terminal to stimulate the passive terminal to send an uplink signal.

Compared with the passive terminal, the active terminal has a higher uplink transmit power. However, when the active terminal is located at a cell edge, downlink receiving performance of the active terminal is poor. Compared with the active terminal, the passive terminal has a stronger signal reflection capability. However, when the passive terminal is located at the cell edge, power attenuation of the downlink signal received from the base station is large, and consequently uplink sending performance of the passive terminal is poor.

In other words, the active terminal and the passive terminal have respective advantages. In addition, in some scenarios (for example, located at the cell edge), receiving/sending performance of the active terminal and the passive terminal is poor. Based on this, when both the active terminal and the passive terminal exist in the network, how to perform communication by using features of the two types of terminals to improve communication performance is an urgent problem to be resolved currently.

Therefore, this application provides a communication method, to provide the carrier for the passive terminal through the active terminal, and improve the uplink sending performance of the passive terminal; or to reflect, through the passive terminal, the downlink signal sent by the base station to the active terminal, and improve the downlink receiving performance of the active terminal.

The technical solutions provided in this application may be applied to various communication systems. The communication system may be a 3rd generation partnership project (3rd generation partnership project, 3GPP) communication system, for example, a 4th generation (4th generation, 4G) long term evolution (long term evolution, LTE) system, a 5G NR system, an internet of vehicles (vehicle to everything, V2X) system, a system for hybrid networking of LTE and NR, a device-to-device (device-to-device, D2D) system, a machine-to-machine (machine-to-machine, M2M) communication system, an internet of things (Internet of Things, IoT) system, a passive IoT (passive IoT, PIoT) system, or another next generation communication system. Alternatively, the communication system may be a non-3GPP communication system, for example, a wireless local area network (wireless local area network, WLAN). This is not limited.

The foregoing communication systems applicable to this application are merely examples for description, and the communication systems applicable to this application are not limited thereto. This is uniformly described herein, and details are not described below again.

FIG. 2 shows an example of a communication system according to an embodiment of this application. The communication system includes a network device, a first terminal, and a second terminal.

The first terminal can generate a carrier. In other words, the first terminal has a capability of generating a carrier; or when sending a signal, the first terminal does not require another device to provide a carrier. That is, the first terminal may be an active terminal.

The second terminal cannot generate a carrier. In other words, the second terminal does not have a capability of generating a carrier; or when sending a signal, the second terminal requires another device to provide a carrier. That is, the second terminal may be a passive terminal.

Optionally, the first terminal and the second terminal may be located at different positions in coverage of the network device. A distance between the first terminal and the network device and a distance between the second terminal and the network device are not limited in this application. In FIG. 2, an example in which the first terminal is farther from the network device and the second terminal is closer to the network device is merely used for description. During actual application, the distance between the second terminal and the network device may alternatively be greater than the distance between the first terminal and the network device.

Optionally, the network device in embodiments of this application may be a node in a radio access network, and may be referred to as a radio access network (radio access network, RAN) node (or device), for example, a base station.

For example, the network device may include an evolved base station (NodeB or eNB or e-NodeB, evolved NodeB) in an LTE system or an LTE-A system, for example, a conventional macro base station eNB or a micro base station eNB in a heterogeneous network scenario. Alternatively, the network device may include a next generation NodeB (next generation NodeB, gNB) in an NR system. Alternatively, the network device may include a transmission reception point (transmission reception point, TRP), a home base station (for example, a home evolved NodeB or a home NodeB, HNB), a baseband unit (baseband unit, BBU), a baseband pool (BBU pool), a wireless fidelity (wireless fidelity, Wi-Fi) access point (access point, AP), or the like. Alternatively, the network device may include a base station in a non-terrestrial network (non-terrestrial network, NTN), that is, may be deployed on a high-altitude platform or a satellite. In the NTN, the network device may serve as a layer 1 (L1) relay (relay), or may serve as a base station, or may serve as a distributed unit (distributed unit, DU), or may serve as an integrated access and backhaul (integrated access and backhual, IAB) node. Alternatively, the network device may be a device that implements a base station function in IoT, for example, a device that implements the base station function in V2X, D2D, or machine-to-machine (machine-to-machine, M2M). This is not limited in embodiments of this application.

Optionally, the base station in embodiments of this application may include various forms of base stations, for example, a macro base station, a micro base station (also referred to as a small cell), a relay station, an access point, a home base station, a TRP, a transmission point (transmission point, TP), a mobile switching center, or the like. This is not specifically limited in embodiments of this application.

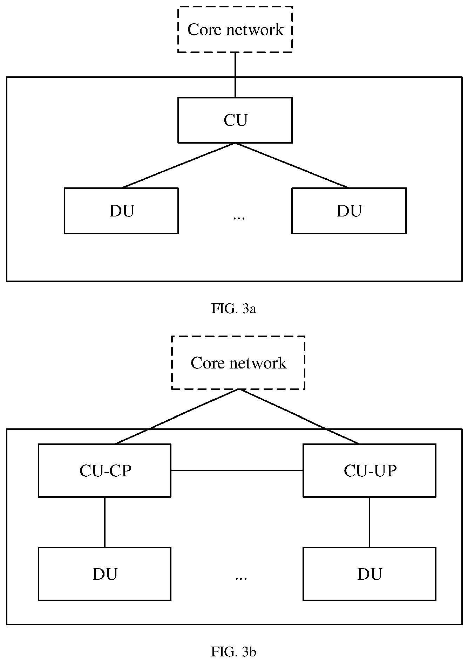

Optionally, in a possible deployment form, as shown in FIG. 3a, the network device may include a central unit (central unit, CU) and/or a distributed unit (distributed unit, DU). Further, the network device may include an active antenna unit (active antenna unit, AAU) (not shown in FIG. 3a).

Optionally, the CU may implement a part of functions of the network device, and the DU implements another part of functions of the network device. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a medium access control (medium access control, MAC) layer, and a physical (physical, PHY) layer. It should be noted that such protocol layer division is merely an example, and division may alternatively be performed at another protocol layer.

Optionally, the AAU may implement some physical layer processing functions, radio frequency processing, and a function related to an active antenna. Information at the RRC layer is finally changed to information at the PHY layer, or is changed from information at the PHY layer. Therefore, in this architecture, higher layer signaling (for example, RRC layer signaling) may also be considered as being sent by the DU, or sent by the DU and the AAU.

Further, as shown in FIG. 3b, a control plane (CU control plane, CU-CP) and a user plane (CU user plane, CU-UP) of the CU may be further separated and implemented as different entities, and the different entities are separately a control plane CU entity (CU-CP entity) and a user plane CU entity (CU-UP entity).

Optionally, in the structure of the network device shown in FIG. 3a or FIG. 3b, signaling generated by the CU may be sent to a terminal device through the DU, or signaling generated by the terminal device may be sent to the CU through the DU. The DU may transparently transmit the signaling to the terminal device or the CU by directly encapsulating the signaling at a protocol layer without parsing the signaling.

Optionally, a terminal (including the first terminal or the second terminal) in embodiments of this application may be a user-side device configured to implement a wireless communication function, for example, a terminal device or a chip that can be used in the terminal device. The terminal may be user equipment (user equipment, UE), an access terminal, a terminal unit, a terminal station, a mobile station, a remote station, a remote terminal, a mobile device, a wireless communication device, a terminal agent, a terminal apparatus, or the like in a 5G network or an evolved public land mobile network (public land mobile network, PLMN) after 5G. The user equipment may be in a terminal form of a mobile phone or a module in scenarios such as RedCap, narrowband internet of things (narrowband internet of things, NB-IoT), and enhanced machine type communication (enhanced machine type communication, eMTC), or may be in another form (for example, a relay, a mobile terminal in an integrated access and backhaul node, or customer premises equipment) having the foregoing function. The access terminal may be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a vehicle-mounted device, a wearable device, a virtual reality (virtual reality, VR) terminal device, an augmented reality (augmented reality, AR) terminal device, a wireless terminal in industrial control (industrial control), a wireless terminal in self driving (self driving), a wireless terminal in telemedicine (telemedicine), a wireless terminal in a smart grid (smart grid), a wireless terminal in transportation safety (transportation safety), a wireless terminal in a smart city (smart city), a wireless terminal in a smart home (smart home), or the like. Alternatively, the terminal may be a terminal having a communication function in IoT, for example, a terminal (for example, an internet of vehicles device) in V2X, a terminal in D2D communication, or a terminal in M2M communication. The terminal may be mobile or fixed.

With reference to the accompanying drawings, the following describes in detail the method provided in embodiments of this application. It may be understood that in embodiments of this application, the network device or the terminal may perform a part or all of steps in embodiments of this application. These steps or operations are merely examples. In embodiments of this application, other operations or variations of the operations may be further performed. In addition, the steps may be performed in a sequence different from a sequence presented in embodiments of this application, and not all operations in embodiments of this application may be performed.

For example, a method provided in the following embodiments of this application may be applied to a scenario in which both an active terminal and a passive terminal exist in a network. Certainly, an application scenario of this application is merely described herein as an example. The application scenario does not constitute any limitation on this application, and an application scenario of the method provided below is not specifically limited in this application. For example, the method may alternatively be applied to a scenario in which a plurality of other types of terminals exist in a network.

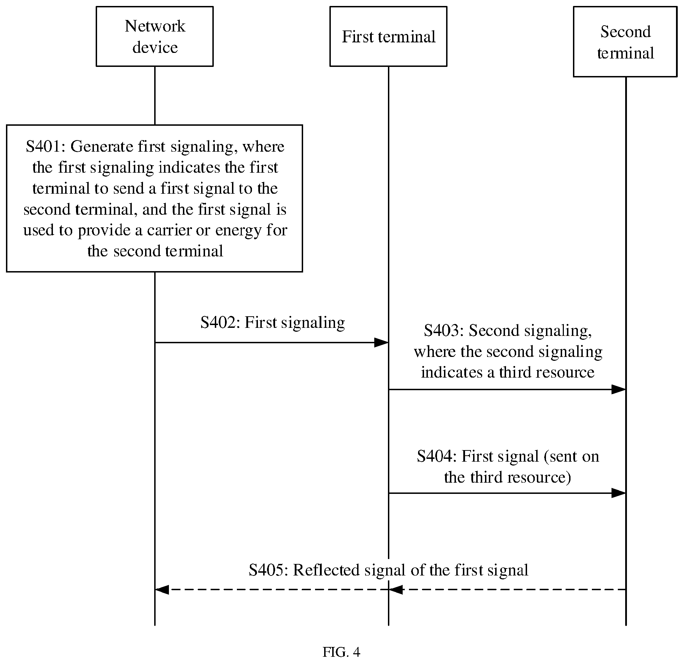

FIG. 4 shows a communication method according to this application. In the method, an active terminal may be used to provide a carrier for a passive terminal. With reference to FIG. 4, the method includes the following steps.

S401: A network device generates first signaling.

S402: The network device sends the first signaling to a first terminal. Correspondingly, the first terminal receives the first signaling from the network device.

The first signaling indicates the first terminal to send a first signal to a second terminal. The first signal is used to provide a carrier or energy for the second terminal.

Optionally, the first signal may be a dedicated signal between the first terminal and the second terminal, and the network device does not need to receive the first signal. The first signal may also be understood as an excitation signal, a charging signal, or an energy charging signal. Alternatively, the first signal may be an uplink signal between the first terminal and the network device, and the network device needs to receive the first signal.

For example, that the first signal is used to provide the carrier for the second terminal may be understood as follows: The first signal may be used as a carrier to carry information that needs to be sent by the second terminal. In other words, the second terminal may modulate the information that needs to be sent to the first signal for sending; or a signal sent by the second terminal may use the first signal as a carrier. When the first signal is used to provide the energy for the second terminal, the second terminal may store the energy by receiving the first signal.

In other words, the network device may indicate (or control) the first terminal to send, to the second terminal, the first signal used to provide the carrier or energy for the second terminal.

Optionally, the first signaling may further indicate a first resource and/or a second resource. The first resource is used to carry the first signal sent by the first terminal to the second terminal. The second resource is used to carry control signaling sent by the first terminal to the second terminal. For example, the first signaling may include resource configuration information, and the first resource and/or the second resource are/is indicated (or configured) by using the resource configuration information.

In a first possible implementation, the first resource may be a resource dedicated to the first signal. For example, the resource configuration information may indicate a time domain start position, a quantity of occupied time units, a frequency domain start position, a quantity of occupied frequency units, and the like of the first resource. The time unit may be, for example, an orthogonal frequency division multiplexing (orthogonal frequency division multiplexing, OFDM) symbol or a slot. The frequency unit may be, for example, a resource element (resource element, RE) or a resource block (resource block, RB).

In a second possible implementation, the first resource may be a part or all of uplink resources between the network device and the first terminal. In other words, the network device may schedule the first terminal to reuse the uplink resource between the network device and the first terminal, to send the first signal to the second terminal. For example, a frequency domain resource of the first resource may be one carrier or a plurality of consecutive carriers in carriers occupied by the uplink resource.

Optionally, a time domain position of the second resource is different from a time domain position of the first resource. A frequency domain position of the second resource may be the same as or different from the frequency domain position of the first resource.

Optionally, when the frequency domain position of the second resource is different from the frequency domain position of the first resource, the resource configuration information may indicate a time-frequency position of the first resource and a time-frequency position of the second resource. When the frequency domain position of the second resource is the same as the frequency domain position of the first resource, the resource configuration information may indicate the time domain position of the first resource and the time domain position of the second resource, and indicate the frequency domain position.

It should be noted that the first resource may be understood as a resource that is configured by the network device and that can be used by the first terminal to send the first signal to the second terminal. Finally, when the first terminal sends the first signal to the second terminal, a resource actually occupied by the first signal may be a part or all of the first resource. Similarly, when the first terminal sends the control signaling to the second terminal, a resource actually occupied by the control signaling may be a part or all of the second resource.

It should be noted that the foregoing uses an example in which the first signaling indicates the first resource and/or the second resource for description. Certainly, the network device may alternatively indicate the first resource and/or the second resource by using signaling other than the first signaling. For example, the resource configuration information may not be carried in the first signaling, but may be carried in other signaling.

Optionally, the first signaling may include first information, and the first information identifies the second terminal. In other words, the first information is associated with or corresponds to the second terminal. For example, the second terminal is an electronic tag. The first information may be a random number agreed on by the second terminal and the network device, for example, the random number A in the procedure shown in FIG. 1; or the first information may be an electronic product code of the second terminal.

Based on this solution, the first signaling carries the first information that identifies the second terminal, so that the first terminal can learn of a receiver of the first signal, and the first terminal can perform subsequent processing (for example, perform a first possible implementation in the following step S403) based on related information of the receiver. In this way, different processing is implemented for different receivers, and communication flexibility is improved.

Optionally, the network device may indicate a response of the second terminal to the first signal. For example, the first signaling may further indicate at least one of the following:
(1) The second terminal sends a reflected signal of the first signal, and the reflected signal does not include information about the second terminal.

Optionally, the information about the second terminal may be information generated by the second terminal or information received by the second terminal from a signal other than the first signal. For example, the information about the second terminal may include the first information that identifies the second terminal. In other words, the first signaling indicates that the second terminal does not additionally modulate the information in the reflected signal, in other words, information carried in the reflected signal of the first signal is the same as the information carried in the first signal.

Optionally, when the first signal is the uplink signal between the first terminal and the network device, and the network device needs to receive the first signal, the first signaling may indicate that the second terminal sends the reflected signal of the first signal, and the reflected signal does not include the information about the second terminal. In this case, it may be considered that the second terminal reflects the uplink signal of the first terminal.

(2) The second terminal sends a reflected signal of the first signal, and the reflected signal includes information about the second terminal.

In other words, the first signaling indicates that the second terminal modulates the information about the second terminal in the reflected signal. When the information about the second terminal includes the first information that identifies the second terminal, a receiver of the reflected signal may identify the second terminal.

Optionally, when the first signal is the dedicated signal between the first terminal and the second terminal, the network device does not need to receive the first signal, and the first signal is used to provide the carrier for the second terminal, the first signaling may indicate that the second terminal sends the reflected signal of the first signal, and the reflected signal includes the information about the second terminal.

(3) The second terminal does not send a reflected signal of the first signal.

Optionally, when the first signal is the dedicated signal between the first terminal and the second terminal, the network device does not need to receive the first signal, and the first signal is used to provide the energy for the second terminal, the first signaling may indicate that the second terminal does not send the reflected signal of the first signal.

Optionally, the network device may indicate the response of the second terminal to the first signal in an explicit manner. For example, the first signaling may include a reflection configuration information field, and different values of the field may indicate different responses of the second terminal to the first signal. For example, when the field is set to a first value, the option (1) is indicated; when the field is set to a second value, the option (2) is indicated; or when the field is set to a third value, the option (3) is indicated.

Alternatively, the network device may indicate the response of the second terminal to the first signal in an implicit manner. For example, a format of the first signaling may be used for implicit indication. When the format of the first signaling is a format 1, the option (1) is indicated; when the format of the first signaling is a format 2, the option (2) is indicated; or when the format of the first signaling is a format 3, the option (3) is indicated.

For another example, implicit indication may be performed based on a mask. For example, the first signaling may carry a group of symbols. When the group of symbols is a first group of symbols, the option (1) is indicated; when the group of symbols is a second group of symbols, the option (2) is indicated; or when the group of symbols is a third group of symbols, the option (3) is indicated.

The foregoing uses an example in which the first signal is used to provide the carrier and energy for the second terminal for description. In addition, the first signal may alternatively be a sensing signal, and is used by the first terminal for sensing. In this scenario, the first signaling may also indicate that the second terminal does not send the reflected signal of the first signal. In this case, the second terminal may be understood as a target in the sensing scenario. The first terminal sends the first signal. After the first signal arrives at a surface of the second terminal, the first signal may be reflected by the surface of the second terminal to form an echo signal, and the first terminal may sense the second terminal based on the echo signal.

The foregoing uses an example in which the first signaling indicates the response of the second terminal to the first signal for description. Certainly, the network device may further indicate, by using signaling that is sent to the first terminal and that is other than the first signaling, the response of the second terminal to the first signal.

S403: The first terminal sends second signaling to the second terminal. Correspondingly, the second terminal receives the second signaling from the first terminal.

The second signaling may be control signaling. The first terminal may send the second signaling to the second terminal on a part or all of the second resource. Correspondingly, the second terminal receives the second signaling from the first terminal on the part or all of the second resource.

Optionally, with reference to the descriptions in step S402, the second resource may be indicated by the first signaling. In other words, that the first signaling indicates the second resource may be understood as follows: The first signaling indicates a resource used to carry the second signaling.

The second signaling indicates a third resource. The third resource is a part or all of the first resource. The third resource may be understood as the resource actually occupied by the first signal sent by the first terminal to the second terminal.

Optionally, after the first terminal receives the first signaling, if the first signaling indicates the first resource, the first terminal may determine the third resource based on the first signaling.

In a first possible implementation, the first terminal may determine the part or all of the first resource as the third resource based on sensing of the first terminal on the second terminal. For example, the sensing of the first terminal on the second terminal may include: the first terminal learns of existence of the second terminal, the first terminal learns of a position of the second terminal, the first terminal learns of historical signal strength of the second terminal, and so on.

Optionally, in this possible implementation, it may be considered that the network device configures some reserved resources (that is, the first resource), and the first terminal may determine, based on the sensing of the first terminal on the second terminal, to send the first signal to the second terminal by using a part or all of the reserved resources. In this scenario, the first signaling may be, for example, RRC signaling.

In a second possible implementation, the first terminal may directly determine the first resource as the third resource without performing determining, that is, the third resource is the same as the first resource.

Optionally, in this possible implementation, it may be considered that the network device schedules, by using the first signaling, the first terminal to send the first signal to the second terminal on a specific time-frequency resource (that is, the first resource). In this scenario, the first signaling may be, for example, downlink control information (downlink control information, DCI).

Optionally, the second signaling may include the first information. For example, the first information may be from the network device. For related descriptions of the first information, refer to the descriptions in step S402. Details are not described herein again. Based on this solution, the second signaling carries the first information that identifies the second terminal, so that a passive terminal can determine whether the second signaling is sent to the passive terminal, and another passive terminal other than the second terminal can discard the second signaling or do not respond to the second signaling when receiving the second signaling. In this way, signaling and power consumption waste of the another passive terminal is reduced.

Optionally, the first terminal may further indicate the response of the second terminal to the first signal. For example, the second signaling may indicate at least one of the following:
(1) The second terminal sends the reflected signal of the first signal, and the reflected signal does not include the information about the second terminal.
(2) The second terminal sends the reflected signal of the first signal, and the reflected signal includes the information about the second terminal.
(3) The second terminal does not send the reflected signal of the first signal. For details, refer to related descriptions in step S402. Details are not described herein again.

Optionally, when the network device indicates the response of the second terminal to the first signal, the response of the second terminal to the first signal indicated by the first terminal may be understood as a forwarding of the indication of the network device. For example, when the first signaling indicates the option (1), the second signaling also indicates the option (1); or when the first signaling indicates the option (2), the second signaling also indicates the option (2).

Optionally, when the second terminal is an electronic tag, the second signaling may be signaling that implements a select command, a query command, a QueryRep command, or an ACK message.

S404: The first terminal sends the first signal to the second terminal on the third resource. Correspondingly, the second terminal receives the first signal from the first terminal on the third resource.

Optionally, when the first resource is the resource dedicated to the first signal, the first signal may be a single-tone (single-tone) signal. Based on this, interference between the first signal and uplink transmission of the first terminal can be reduced.

Optionally, when the first resource is the part or all of uplink resources between the network device and the first terminal, the first signal may be an uplink signal that is sent by the first terminal to the network device and that is carried on the third resource. Based on this, the first terminal does not need to send an additional signal to provide the carrier for the second terminal, so that processing complexity and power consumption of the first terminal can be reduced.

Optionally, a transmit power of the first signal may be autonomously determined by the first terminal, or may be indicated by the network device. For example, the network device may indicate the transmit power of the first signal by using the first signaling. For example, the first signaling may include power configuration information, and the transmit power of the first signal is indicated by using the power configuration information.

For example, the power configuration information may include a value of the transmit power of the first signal. Alternatively, a group of transmit powers may be predefined, and each transmit power in the group of transmit powers may correspond to one index. In this case, the power configuration information may include an index of the transmit power.

It should be noted that the foregoing uses an example in which the first signaling indicates the transmit power of the first signal for description. Certainly, the network device may alternatively indicate the transmit power of the first signal by using signaling other than the first signaling. For example, the power configuration information may not be carried in the first signaling, but may be carried in other signaling (for example, cell-level broadcast signaling).

Based on this solution, when indicating the transmit power of the first signal to the first terminal, the network device may indicate the first terminal to send the first signal at a high transmit power, so that the first signal still has a high power when arriving at the second terminal, and the reflected signal of the first signal also has a high power. In this way, uplink sending performance of the second terminal is effectively improved.

Optionally, in steps S403 and S404, there is an interval of first duration between a time domain position (actually) occupied by the second signaling and a time domain position (actually) occupied by the first signal. For example, an interval between two time domain positions may be an interval between start positions of the two time domain positions, an interval between end positions of the two time domain positions, an interval between central positions of the two time domain positions, an interval between an end position of a former time domain position and a start position of a latter time domain position, or the like.

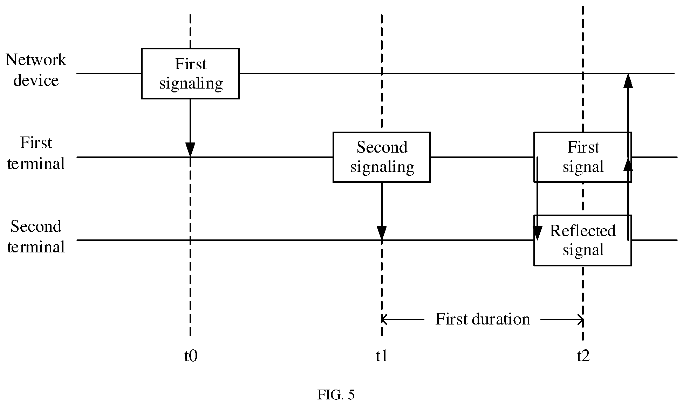

For example, as shown in FIG. 5, it is assumed that a central position of a time domain position occupied by the first signaling is a moment t0, a central position of the time domain position occupied by the second signaling is a moment t1, and a central position of the time domain position occupied by the first signal is a moment t2. In this case, the first duration may be an interval between the moment t1 and the moment t2.

Optionally, when a duplex mode for communication between the first terminal and the second terminal is HD-FDD, a frequency domain position occupied by the second signaling belongs to a downlink spectrum, and a frequency domain position occupied by the first signal belongs to an uplink spectrum, the first duration is used by the first terminal to perform spectrum switching. The first duration needs to be greater than or equal to duration required by the first terminal to complete operating spectrum switching. The downlink spectrum may be a spectrum that is defined in a protocol and that is used for downlink transmission, and the uplink spectrum may be a spectrum that is defined in the protocol and that is used for uplink transmission.

Optionally, the duplex mode for communication between the first terminal and the second terminal may be indicated by the network device. For example, the network device may indicate the duplex mode by using the first signaling. In other words, the first signaling may further indicate the duplex mode for communication between the first terminal and the second terminal. Certainly, the network device may alternatively indicate, by using signaling (for example, cell-level broadcast signaling) other than the first signaling, the duplex mode for communication between the first terminal and the second terminal. This is not specifically limited in this application.

Optionally, the duplex mode for communication between the first terminal and the second terminal may be HD-FDD or HD-TDD. When the first signal is the dedicated signal between the first terminal and the second terminal, if the duplex mode is HD-TDD, the first signaling and the second signaling may be sent in downlink slots, and the first signal may be sent in a downlink slot or an uplink slot. If the duplex mode is HD-FDD, the first signaling and the second signaling may be sent in the downlink spectrum, and the first signal may be sent in the downlink spectrum or the uplink spectrum. The downlink slot may be a downlink slot that is configured by the network device and that is between the network device and the first terminal, and the uplink slot may be an uplink slot that is configured by the network device and that is between the network device and the first terminal.

Optionally, when the network device or the first terminal indicates that the second terminal sends the reflected signal of the first signal, the second terminal may perform the following step S405:
S405: The second terminal sends the reflected signal of the first signal. Correspondingly, the network device or the first terminal receives the reflected signal of the first signal.

Optionally, the reflected signal of the first signal may be understood as a signal using the first signal as a carrier.

Optionally, when frequency shifting is not considered, it may be considered that a time-frequency resource occupied by the reflected signal is the same as a time-frequency resource occupied by the first signal, or a deviation between the time-frequency resource occupied by the reflected signal and the time-frequency resource occupied by the first signal is small. In FIG. 5, an example in which the time-frequency resource occupied by the reflected signal is the same as the time-frequency resource occupied by the first signal is used for description.

Optionally, when the network device or the first terminal indicates that the reflected signal does not include the information about the second terminal, the reflected signal does not include the information about the second terminal. When the network device or the first terminal indicates that the reflected signal includes the information about the second terminal, the reflected signal includes the information about the second terminal.

Optionally, when the network device or the first terminal indicates that the second terminal sends the reflected signal of the first signal, the network device or the first terminal may further indicate a reflection parameter. The reflection parameter is used to generate the reflected signal.

For example, when that the reflected signal includes the information about the second terminal is indicated, the reflection parameter may include a modulation and coding scheme (modulation and coding scheme, MCS), and the second terminal may modulate and encode the information about the second terminal based on a modulation and coding manner indicated by the MCS, to obtain the reflected signal. When that the reflected signal does not include the information about the second terminal is indicated, the reflection parameter may indicate that a reflected signal of a second signal carries an all-1 sequence, an on-off keying (on-off keying, OOK) modulation manner is used, and encoding is not performed.

Optionally, a destination of the reflected signal of the first signal may be the network device. In other words, the network device needs to receive the reflected signal of the first signal. When the first signal is the uplink signal between the first terminal and the network device, and the network device needs to receive the first signal, if the reflected signal of the first signal does not include the information about the second terminal, it may be considered that the network device receives an uplink signal sent by the first terminal and an uplink signal reflected by the second terminal. In this way, uplink sending performance of the first terminal can be improved. When the first signal is the dedicated signal between the first terminal and the second terminal, and the network device does not need to receive the first signal, if the reflected signal of the first signal includes the information about the second terminal, it may be considered that the reflected signal of the first signal is a response to an operation such as inventory performed by the network device.

Optionally, when the first signal is the dedicated signal between the first terminal and the second terminal, and the network device does not need to receive the first signal, for a resource that is configured by the network device and that is used for communication between the first terminal and the second terminal, the network device may use the resource, or may not use the resource.

For example, for the first resource, the network device may not perform receiving on the first resource. In this case, the reflected signal of the first signal needs to be forwarded by the first terminal to the network device. In other words, the solution of this application may further include: The first terminal receives the reflected signal of the first signal from the second terminal, and sends a second signal to the network device. Correspondingly, the network device receives the second signal from the first terminal. The second signal is a reflected signal that is of the first signal and that is forwarded by the first terminal.

Alternatively, the network device may perform receiving on the first resource. In this case, the network device may receive the reflected signal of the first signal from the second terminal, or the network device may receive a reflected signal (that is, a second signal) forwarded by the first terminal. In this scenario, whether the first terminal forwards the reflected signal of the first signal may be determined by the first terminal based on signal strength of the reflected signal and/or position information of the second terminal. In other words, the solution of this application may further include: The first terminal receives the reflected signal of the first signal from the second terminal, and determines, based on the signal strength of the reflected signal and/or the position information of the second terminal, whether to forward the reflected signal of the first signal.

For example, when a first condition is met, the first terminal may not forward the reflected signal of the first signal. In this case, the network device may receive the reflected signal of the first signal from the second terminal. The first condition may include at least one of the following: the signal strength of the reflected signal is greater than a first threshold, a distance between the second terminal and the first terminal is greater than a second threshold, or a distance between the second terminal and the network device is greater than a third threshold.

When a second condition is met, the first terminal may forward the reflected signal of the first signal, that is, the first terminal sends the second signal to the network device. Correspondingly, the network device receives the second signal from the first terminal. The second signal is the reflected signal that is of the first signal and that is forwarded by the first terminal. The second condition may include at least one of the following: the signal strength of the reflected signal is less than the first threshold, the distance between the second terminal and the first terminal is less than the second threshold, or the distance between the second terminal and the network device is less than the third threshold.

When the signal strength of the reflected signal is equal to the first threshold, the distance between the second terminal and the first terminal is equal to the second threshold, or the distance between the second terminal and the network device is equal to the third threshold, whether the first terminal forwards the reflected signal of the first signal may be determined by the first terminal based on an actual situation.

Optionally, that the first terminal forwards the reflected signal of the first signal may include: The first terminal amplifies the reflected signal to obtain the second signal, and sends the second signal to the network device, and/or the first terminal decodes information in the reflected signal, re-encodes and modulates the information to obtain the second signal, and sends the second signal to the network device.

Optionally, the second signal may include the first information that identifies the second terminal. The first information may be carried in the reflected signal of the first signal, or may be autonomously added by the first terminal. This is not specifically limited in this application.

It should be noted that the second signal may also have another name, for example, a forwarding signal. A name of the second signal is not specifically limited in this application.

Optionally, when the network device does not perform receiving on the first resource, the network device may send indication information to the first terminal, to indicate the first terminal to forward the reflected signal of the first signal to the network device. When the network device performs receiving on the first resource, the network device may indicate the first threshold, the second threshold, or the third threshold to the first terminal. Alternatively, the network device may not send any indication to the first terminal for whether the first terminal forwards the reflected signal of the first signal, and the first terminal autonomously determines whether to forward the reflected signal of the first signal.

Optionally, when the network device or the first terminal indicates that the second terminal does not send the reflected signal of the first signal, the second terminal may store the energy by receiving the first signal.

Based on the foregoing solution, the network device can control the first terminal to send the first signal to the second terminal, to provide the carrier or energy for the second terminal. When the first signal is used to provide the carrier, even if the second terminal is located at the cell edge, a power of a downlink signal sent by the network device when the downlink signal arrives at the second terminal is extremely low, and the second terminal can still perform uplink sending based on the first signal sent by the first terminal. When the first terminal is close to the second terminal, the first signal sent by the first terminal still has a high power when arriving at the second terminal, and therefore the reflected signal that is of the first signal and that is sent by the second terminal may also have a high power. In this way, the uplink sending performance, for example, uplink coverage, of the second terminal is improved. When the first signal is used to provide the energy, the second terminal can store the energy based on the first signal, to ensure sufficient energy for a subsequent operation.

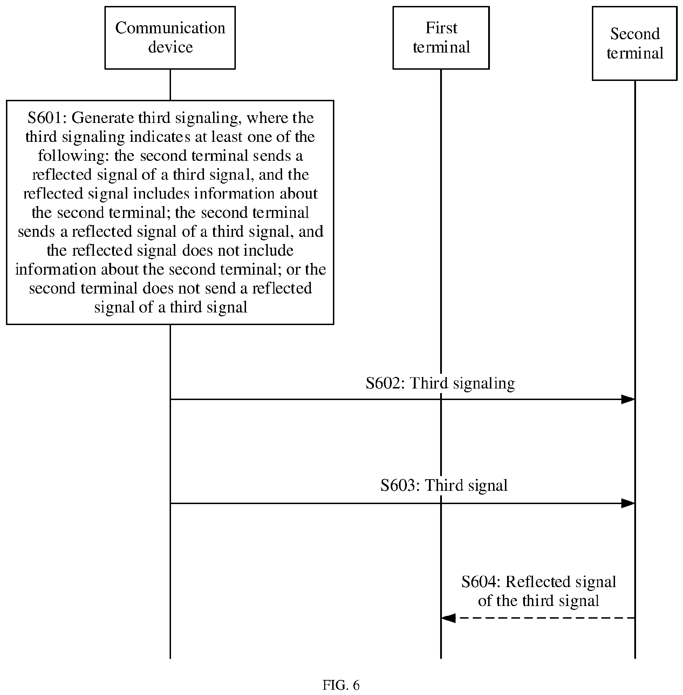

In the method shown in FIG. 4, the active terminal may be used to provide the carrier for the passive terminal, to improve uplink sending performance of the passive terminal. In addition, this application further provides a communication method. As shown in FIG. 6, the communication method includes the following steps.

S601: A communication device generates third signaling. The communication device may be a network device or a first terminal.

S602: The communication device sends the third signaling to a second terminal. Correspondingly, the second terminal receives the third signaling from the communication device. The third signaling indicates at least one of the following:
(1) The second terminal sends a reflected signal of a third signal, and the reflected signal does not include information about the second terminal.

For the information about the second terminal, refer to the foregoing related descriptions. When the reflected signal does not include the information about the second terminal, information carried in the reflected signal is the same as information carried in the third signal.

Optionally, if the third signal is a signal sent by the network device to the first terminal, the third signal is a downlink signal between the network device and the first terminal, the third signal includes information sent by the network device to the first terminal, or a destination of the third signal is the first terminal, the third signaling may indicate that the second terminal sends the reflected signal of the third signal, and the reflected signal does not include the information about the second terminal.

In other words, the network device may indicate (or control) the second terminal to send a reflected signal of the downlink signal between the network device and the first terminal. In other words, the network device may indicate the second terminal to provide a plurality of paths of signals for the first terminal.

Optionally, because the third signal is the signal sent by the network device to the first terminal, and carries the information sent by the network device to the first terminal, to reduce demodulation difficulty of the first terminal and interference to the first terminal, the network device may indicate that the reflected signal of the third signal does not include the information about the second terminal.

Optionally, the third signal may carry data information sent by the network device to the first terminal, that is, the third signal may be a data signal. Alternatively, the third signal may carry control information sent by the network device to the first terminal, that is, the third signal may be control signaling.

(2) The second terminal sends a reflected signal of a third signal, and the reflected signal includes information about the second terminal. For example, the information about the second terminal may include first information that identifies the second terminal, and the like.

Optionally, if the third signal is an excitation signal used to provide a carrier for the second terminal, the third signaling may indicate that the second terminal sends the reflected signal of the third signal, and the reflected signal includes the information about the second terminal.

(3) The second terminal does not send a reflected signal of a third signal.

Optionally, if the third signal is a charging signal used to provide energy for the second terminal, or the third signal is a sensing signal, the third signaling may indicate that the second terminal does not send the reflected signal of the third signal.

Optionally, when the second terminal is an electronic tag, the third signaling may be signaling that implements a function of a select command, a query command, a QueryRep command, or an ACK message.

Optionally, the third signaling may include the first information that identifies the second terminal. For the first information, refer to the foregoing related descriptions. Details are not described herein again.

Based on this solution, the third signaling carries the first information that identifies the second terminal, so that a passive terminal can determine whether the third signaling is sent to the passive terminal, and another passive terminal other than the second terminal can discard the third signaling or do not respond to the third signaling when receiving the third signaling. In this way, signaling and power consumption waste of the another passive terminal is reduced.

S603: The communication device sends the third signal. Correspondingly, the second terminal receives the third signal from the communication device.

Optionally, before step S603, the communication device may indicate, to the second terminal, a resource used to carry the third signal, so that the second terminal receives the third signal on the resource. For example, the communication device may indicate, by using the third signaling, the resource used to carry the third signal. For example, resource configuration information may be carried in the third signaling, and a time domain start position, a quantity of occupied time units, a frequency domain start position, and a quantity of occupied frequency units, and the like of the resource are indicated by using the resource configuration information.

It may be understood that when the third signal is the downlink signal between the network device and the first terminal, the communication device in step S603 is the network device. The first terminal may also receive the third signal from the network device. The third signal received by the first terminal from the network device may be understood as a third signal on a path (denoted as a path 1).

Optionally, when the third signaling indicates that the second terminal sends the reflected signal of the third signal, the second terminal may perform the following step S604:
S604: The second terminal sends the reflected signal of the third signal.

Optionally, when the third signaling indicates that the reflected signal of the third signal does not include the information about the second terminal, the reflected signal does not include the information about the second terminal. When the third signaling indicates that the reflected signal of the third signal includes the information about the second terminal, the reflected signal includes the information about the second terminal.

Optionally, when the third signaling indicates that the second terminal sends the reflected signal of the first signal, the third signaling may further indicate a reflection parameter. The reflection parameter is used to generate the reflected signal. For details, refer to related descriptions in the method shown in FIG. 4. Details are not described herein again. Optionally, when the third signal is the downlink signal between the network device and the first terminal, the first terminal receives the reflected signal of the third signal. If the reflection parameter indicates that the reflected signal of the third signal carries an all-1 sequence, an OOK modulation manner is used, and encoding is not performed, it may be considered that the reflected signal that is of the third signal and that is generated based on the reflection parameter is the same as the third signal. Therefore, the reflected signal that is of the third signal and that is received by the first terminal from the second terminal may be understood as a third signal on another path (denoted as a path 2).

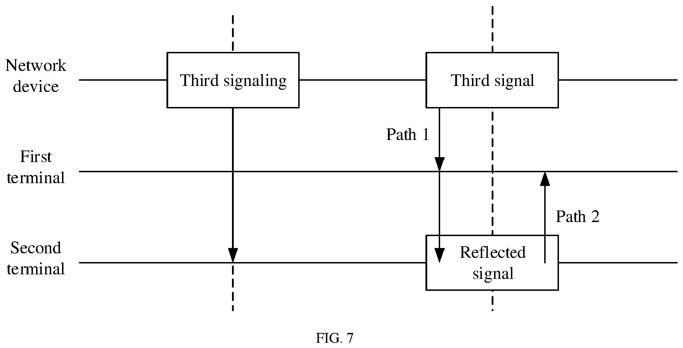

In other words, for the first terminal, a signal finally received by the first terminal is a superimposed signal of third signals on a plurality of paths. For example, as shown in FIG. 7, the signal received by the first terminal may be a superimposed signal of the third signal that is from the network device and that is on the path 1 and the reflected signal that is of the third signal, that is from the second terminal, and that is on the path 2.

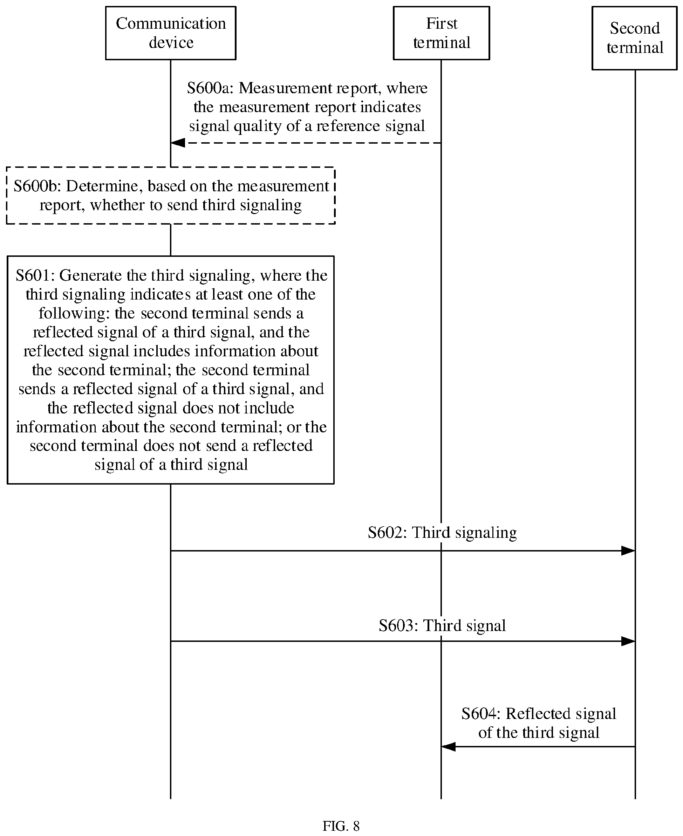

Optionally, if the third signaling indicates that the second terminal sends the reflected signal of the third signal, and the reflected signal does not include the information about the second terminal, the network device may determine, based on a measurement report of the first terminal, whether to perform the method shown in FIG. 6. For example, as shown in FIG. 8, before step S601, the communication method may further include the following steps:
S600a: The first terminal sends the measurement report to the network device. Correspondingly, the network device receives the measurement report from the first terminal.

The measurement report indicates signal quality of a reference signal measured by the first terminal. The reference signal is a reference signal of a serving cell of the first terminal, and the serving cell of the first terminal is managed by the network device.

For example, the signal quality of the reference signal may be represented by a reference signal received power (reference signal received power, RSRP), reference signal received quality (reference signal received quality, RSRQ), or the like.

S600b: The network device determines, based on the measurement report, whether to send the third signaling. The third signaling indicates that the second terminal sends the reflected signal of the third signal.

In other words, the network device may determine, based on the measurement report of the first terminal, whether to send, to the second terminal, the third signaling that indicates that the second terminal sends the reflected signal of the third signal.

Optionally, when the signal quality of the reference signal is greater than a fourth threshold, the network device may determine not to send the third signaling, that is, not to perform step S601, in other words, not to perform the method shown in FIG. 6. When the signal quality of the reference signal is less than or equal to the fourth threshold, the network device may determine to send the third signaling, that is, perform step S601, in other words, perform the method shown in FIG. 6.

Optionally, the fourth threshold may be defined in a protocol, or may be autonomously determined by the network device. This is not specifically limited in this application.

Based on steps S600a and S600b, the network device may not send the third signaling when receiving performance of the first terminal is good (for example, the signal quality of the reference signal is greater than the fourth threshold). In this case, the second terminal does not need to send the reflected signal of the third signal, so that power consumption of the second terminal can be reduced. Alternatively, the network device may send the third signaling when receiving performance of the first terminal is poor (for example, the signal quality of the reference signal is less than the fourth threshold). In this case, the second terminal may send the reflected signal of the third signal based on the third signaling. When the third signal is the downlink signal between the network device and the first terminal, the reflected signal sent by the second terminal may provide the plurality of paths for the first terminal. In this way, downlink receiving performance of the first terminal is improved.

Based on the foregoing solution, the network device controls the second terminal to send a reflected signal of the downlink signal between the network device and the first terminal, so that the first terminal can receive a superimposed signal of downlink signals that arrive at the first terminal on the plurality of paths. In this way, a power and quality of the downlink signal arriving at the first terminal is improved, and the downlink receiving performance of the first terminal is improved.

It should be noted that the method shown in FIG. 4 and the method shown in FIG. 6 may be independently implemented, are not dependent on each other, and are decoupled from each other. Alternatively, the method shown in FIG. 4 and the method shown in FIG. 6 may be combined with each other. For example, the third signal in the method shown in FIG. 6 may be the first signaling in the method shown in FIG. 4. To be specific, the network device sends the third signaling to the second terminal, and sends the first signaling to the first terminal. The second terminal may send a reflected signal of the first signaling based on the third signaling. After receiving a superimposed signal of the first signaling from a plurality of paths, the first terminal sends the second signaling and the first signal to the second terminal based on the first signaling, so that the second terminal sends the reflected signal of the first signal.

Certainly, the method shown in FIG. 4 and the method shown in FIG. 6 may alternatively be combined in another manner, to obtain a new embodiment. This is not specifically limited in this application.

It may be understood that, in the foregoing embodiments, the method and/or the step implemented by the network device may alternatively be implemented by a component (for example, a processor, a chip, a chip system, a circuit, a logical module, or software such as a chip or a circuit) that can be used in the network device; or the method and/or the step implemented by the terminal may alternatively be implemented by a component (for example, a processor, a chip, a chip system, a circuit, a logical module, or software such as a chip or a circuit) that can be used in the terminal.

It may be understood that, to implement the foregoing functions, the communication apparatus includes a corresponding hardware structure and/or software module for performing each function. A person skilled in the art should easily be aware that, in combination with units and algorithm steps of the examples described in the embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method embodiments. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, division into the modules is an example and is merely logical function division, and may be other division during actual implementation.

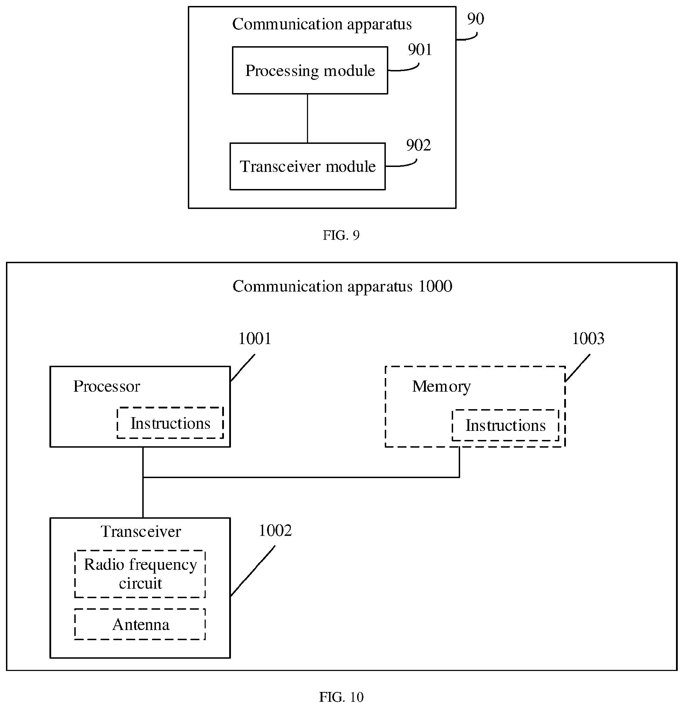

FIG. 9 of a communication apparatus is a diagram of a structure of a communication apparatus 90. The communication apparatus 90 includes a processing module 901 and a transceiver module 902. The communication apparatus 90 may be configured to implement functions of the network device, the first terminal, or the second terminal.

In some embodiments, the communication apparatus 90 may further include a storage module (not shown in FIG. 9), configured to store program instructions and data.

In some embodiments, the transceiver module 902 may also be referred to as a transceiver unit, configured to implement a sending function and/or a receiving function. The transceiver module 902 may include a transceiver circuit, a transceiver machine, a transceiver, or a communication interface.

In some embodiments, the transceiver module 902 may include a receiving module and a sending module, respectively configured to perform receiving steps and sending steps performed by the network device, the first terminal, or the second terminal in the foregoing method embodiments, and/or configured to support another process of the technology described in this specification. The processing module 901 may be configured to perform processing (for example, determining and generation) steps performed by the network device, the first terminal, or the second terminal in the foregoing method embodiments, and/or configured to support another process of the technology described in this specification.

When the communication apparatus 90 is configured to implement a function of the network device,
in a first possible implementation, the processing module 901 is configured to generate first signaling. The transceiver module 902 is configured to send the first signaling to a first terminal. The first signaling indicates the first terminal to send a first signal to a second terminal, and the first signal is used to provide a carrier or energy for the second terminal.

Optionally, the first signaling further indicates a first resource and/or a second resource. The first resource is used to carry the first signal, and the second resource is used to carry control signaling sent by the first terminal to the second terminal.

Optionally, the first signaling further indicates a duplex mode for communication between the first terminal and the second terminal, and/or a transmit power of the first signal.

Optionally, the first signaling further indicates at least one of the following: the second terminal sends a reflected signal of the first signal, and the reflected signal does not include information about the second terminal; the second terminal sends a reflected signal of the first signal, and the reflected signal includes information about the second terminal; or the second terminal does not send a reflected signal of the first signal.

Optionally, the first signaling includes first information, and the first information identifies the second terminal.

Optionally, the transceiver module 902 is further configured to receive the reflected signal of the first signal from the second terminal, or the transceiver module 902 is further configured to receive a second signal from the first terminal, where the second signal includes the first information that identifies the second terminal.

In a second possible implementation, the processing module 901 is configured to generate third signaling. The transceiver module 902 is configured to send the third signaling to a second terminal, where the third signaling indicates at least one of the following: the second terminal sends a reflected signal of a third signal, and the reflected signal does not include information about the second terminal; the second terminal sends a reflected signal of a third signal, and the reflected signal includes information about the second terminal; or the second terminal does not send a reflected signal of a third signal.

Optionally, the third signaling further indicates a resource used to carry the third signal.

Optionally, the third signaling includes first information, and the first information identifies the second terminal.

Optionally, when the third signaling indicates that the second terminal sends the reflected signal of the third signal, and the reflected signal does not include the information about the second terminal, the transceiver module 902 is further configured to receive a measurement report from a first terminal, where the measurement report indicates signal quality that is of a reference signal and that is measured by the first terminal. The processing module 901 is further configured to determine, based on the measurement report, whether to send the third signaling.

When the communication apparatus 90 is configured to implement a function of the first terminal,
in a first possible implementation, the transceiver module 902 is configured to receive first signaling from a network device, where the first signaling indicates the first terminal to send a first signal to a second terminal. The transceiver module 902 is further configured to send, to the second terminal, second signaling that indicates a third resource. The transceiver module 902 is further configured to send the first signal to the second terminal on the third resource, where the first signal is used to provide a carrier or energy for the second terminal.

Optionally, the second signaling further indicates at least one of the following: the second terminal sends a reflected signal of the first signal, and the reflected signal does not include information about the second terminal; the second terminal sends a reflected signal of the first signal, and the reflected signal includes information about the second terminal; or the second terminal does not send a reflected signal of the first signal.

Optionally, there is an interval of first duration between a time domain position occupied by the second signaling and a time domain position occupied by the first signal.

Optionally, the first signaling further indicates a first resource, and the first resource is used to carry the first signal. The method further includes: The first terminal determines the third resource based on the first signaling, where the third resource is a part or all of the first resource.

Optionally, the first signaling further indicates a resource used to carry the second signaling.

Optionally, the first signaling further indicates a transmit power of the first signal.

Optionally, the second signaling includes first information, and the first information identifies the second terminal.

Optionally, when the second signaling further indicates that the second terminal sends the reflected signal of the first signal, and the reflected signal includes the information about the second terminal, the transceiver module 902 is further configured to receive the reflected signal of the first signal from the second terminal. The processing module 901 is configured to determine, based on signal strength of the reflected signal and/or position information of the second terminal, whether to forward the reflected signal.

When the communication apparatus 90 is configured to implement a function of the second terminal,
in a first possible implementation, the transceiver module 902 is configured to receive, from a first terminal, second signaling that indicates a third resource. The transceiver module 902 is further configured to receive a first signal from the first terminal on the third resource, where the first signal is used to provide a carrier or energy for the second terminal.

Optionally, the second signaling further indicates at least one of the following: the second terminal sends a reflected signal of the first signal, and the reflected signal does not include information about the second terminal; the second terminal sends a reflected signal of the first signal, and the reflected signal includes information about the second terminal; or the second terminal does not send a reflected signal of the first signal.

Optionally, there is an interval of first duration between a time domain position occupied by the second signaling and a time domain position occupied by the first signal.

Optionally, the second signaling includes first information, and the first information identifies the second terminal.

In a second possible implementation, the transceiver module 902 is configured to receive third signaling from a communication device, where the third signaling indicates at least one of the following: the second terminal sends a reflected signal of a third signal, and the reflected signal does not include information about the second terminal; the second terminal sends a reflected signal of a third signal, and the reflected signal includes information about the second terminal; or the second terminal does not send a reflected signal of a third signal. The transceiver module 902 is further configured to receive the third signal.

Optionally, the third signaling further indicates a resource used to carry the third signal.

Optionally, the third signaling includes first information, and the first information identifies the second terminal.

All related content of the steps in the foregoing method embodiments may be cited in function descriptions of the corresponding functional modules. Details are not described herein again.

In this application, the communication apparatus 90 may be presented in a form of functional modules obtained through division in an integrated manner. The "module" herein may be an application-specific integrated circuit (application-specific integrated circuit, ASIC), a circuit, a processor and a memory that execute one or more software or firmware programs, an integrated logic circuit, and/or another component that can provide the foregoing functions.

In some embodiments, when the communication apparatus 90 in FIG. 9 is a chip or a chip system, a function/implementation process of the transceiver module 902 may be implemented by an input/output interface (or a communication interface) of the chip or the chip system, and a function/implementation process of the processing module 901 may be implemented by a processor (or a processing circuit) of the chip or the chip system.

The communication apparatus 90 provided in this embodiment may perform the foregoing methods. Therefore, for technical effect that can be achieved by the communication apparatus, refer to the foregoing method embodiments. Details are not described herein again.

In a possible product form, the network device, the first terminal, or the second terminal in embodiments of this application may alternatively be implemented by the following: one or more field programmable gate arrays (field programmable gate arrays, FPGAs), a programmable logic device (programmable logic device, PLD), a controller, a state machine, gate logic, a discrete hardware component, any other appropriate circuit, or any combination of circuits capable of performing various functions described throughout this application.

In another possible product form, the network device, the first terminal, or the second terminal in embodiments of this application may be implemented by using a general bus architecture. For ease of description, refer to FIG. 10. FIG. 10 is a diagram of a structure of a communication apparatus 1000 according to an embodiment of this application. The communication apparatus 1000 includes a processor 1001 and a transceiver 1002. The communication apparatus 1000 may be a network device, or a chip or a chip system in the network device; or the communication apparatus 1000 may be a first terminal, or a chip or a module in the first terminal; or the communication apparatus 1000 may be a second terminal, or a chip or a module in the second terminal. FIG. 10 shows only main components in the communication apparatus 1000. In addition to the processor 1001 and the transceiver 1002, the communication apparatus may further include a memory 1003 and an input/output apparatus (not shown in the figure).

Optionally, the processor 1001 is mainly configured to: process a communication protocol and communication data, control the entire communication apparatus, execute a software program, and process data of the software program. The memory 1003 is mainly configured to store the software program and data. The transceiver 1002 may include a radio frequency circuit and an antenna. The radio frequency circuit is mainly configured to perform conversion between a baseband signal and a radio frequency signal and process the radio frequency signal. The antenna is mainly configured to receive and send radio frequency signals in a form of an electromagnetic wave. The input/output apparatus, for example, a touchscreen, a display, or a keyboard, is mainly configured to receive data input by a user and output data to the user.

Optionally, the processor 1001, the transceiver 1002, and the memory 1003 may be connected through a communication bus.

After the communication apparatus is powered on, the processor 1001 may read the software program in the memory 1003, interpret and execute instructions of the software program, and process the data of the software program. When data needs to be sent in a wireless manner, the processor 1001 performs baseband processing on the to-be-sent data, and outputs a baseband signal to the radio frequency circuit. The radio frequency circuit performs radio frequency processing on the baseband signal, and then sends a radio frequency signal to the outside through the antenna in a form of an electromagnetic wave. When data is sent to the communication apparatus, the radio frequency circuit receives a radio frequency signal through the antenna, converts the radio frequency signal into a baseband signal, and outputs the baseband signal to the processor 1001. The processor 1001 converts the baseband signal into data, and processes the data.

In another implementation, the radio frequency circuit and the antenna may be disposed independent of the processor that performs baseband processing. For example, in a distributed scenario, the radio frequency circuit and the antenna may be remotely disposed independent of the communication apparatus.

In some embodiments, in hardware implementation, a person skilled in the art may figure out that the communication apparatus 90 may be in a form of the communication apparatus 1000 shown in FIG. 10.

In an example, a function/implementation process of the processing module 901 in FIG. 9 may be implemented by the processor 1001 in the communication apparatus 1000 shown in FIG. 10 by invoking the computer-executable instructions stored in the memory 1003. A function/implementation process of the transceiver module 902 in FIG. 9 may be implemented by the transceiver 1002 in the communication apparatus 1000 shown in FIG. 10.

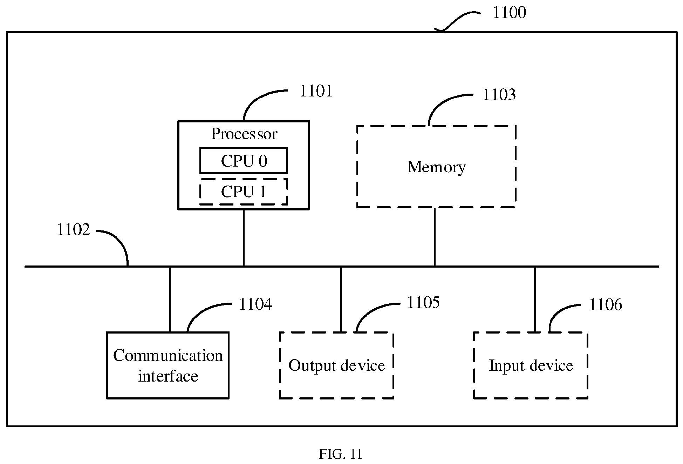

In still another possible product form, the network device, the first terminal, or the second terminal in this application may use a composition structure shown in FIG. 11, or include components shown in FIG. 11. FIG. 11 is a diagram of composition of a communication apparatus 1100 according to this application. The communication apparatus 1100 may be a first terminal, or a chip or a system on chip in the first terminal; may be a second terminal, or a chip or a chip system in the second terminal; or may be a network device, or a module, a chip, or a system on chip in the network device.

As shown in FIG. 11, the communication apparatus 1100 includes at least one processor 1101 and at least one communication interface (where in FIG. 11, only an example in which one communication interface 1104 and one processor 1101 are included is used for description). Optionally, the communication apparatus 1100 may further include a communication bus 1102 and a memory 1103.

The processor 1101 may be a general-purpose central processing unit (central processing unit, CPU), a general-purpose processor, a network processor (network processor, NP), a digital signal processor (digital signal processor, DSP), a microprocessor, a microcontroller, a programmable logic device (programmable logic device, PLD), or any combination thereof. Alternatively, the processor 1101 may be another apparatus having a processing function, for example, a circuit, a component, or a software module. This is not limited.

The communication bus 1102 is configured to connect different components in the communication apparatus 1100, so that the different components can communicate with each other. The communication bus 1102 may be a peripheral component interconnect (peripheral component interconnect, PCI) bus or an extended industry standard architecture (extended industry standard architecture, EISA) bus, or the like. Buses may be classified into an address bus, a data bus, a control bus, and the like. For ease of representation, only one thick line is used to represent the bus in FIG. 11, but this does not mean that there is only one bus or only one type of bus.

The communication interface 1104 is configured to communicate with another device or a communication network. For example, the communication interface 1104 may be a module, a circuit, a transceiver, or any apparatus that can implement communication. Optionally, the communication interface 1104 may alternatively be an input/output interface located in the processor 1101, and is configured to implement signal input and signal output of the processor.

The memory 1103 may be an apparatus having a storage function, and is configured to store instructions and/or data. The instructions may be a computer program.

For example, the memory 1103 may be a read-only memory (read-only memory, ROM) or another type of static storage device that can store static information and/or instructions; may be a random access memory (random access memory, RAM) or another type of dynamic storage device that can store information and/or instructions; or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, or the like), a magnetic disk storage medium or another magnetic storage device, or the like. This is not limited.

It should be noted that the memory 1103 may be independent of the processor 1101, or may be integrated with the processor 1101. The memory 1103 may be located inside the communication apparatus 1100, or may be located outside the communication apparatus 1100. This is not limited. The processor 1101 may be configured to execute the instructions stored in the memory 1103, to implement the method provided in the following embodiment of this application.

In an optional implementation, the communication apparatus 1100 may further include an output device 1105 and an input device 1106. The output device 1105 communicates with the processor 1101, and may display information in a plurality of manners. For example, the output device 1105 may be a liquid crystal display (liquid crystal display, LCD), a light emitting diode (light emitting diode, LED) display device, a cathode ray tube (cathode ray tube, CRT) display device, or a projector (projector). The input device 1106 communicates with the processor 1101, and may receive user input in a plurality of manners. For example, the input device 1106 may be a mouse, a keyboard, a touchscreen device, or a sensing device.

In some embodiments, in hardware implementation, a person skilled in the art may figure out that the communication apparatus 90 shown in FIG. 9 may be in a form of the communication apparatus 1100 shown in FIG. 11.

In an example, a function/implementation process of the processing module 901 in FIG. 9 may be implemented by the processor 1101 in the communication apparatus 1100 shown in FIG. 11 by invoking the computer-executable instructions stored in the memory 1103. A function/implementation process of the transceiver module 902 in FIG. 9 may be implemented by the communication interface 1104 in the communication apparatus 1100 shown in FIG. 11.

It should be noted that the structure shown in FIG. 11 does not constitute a specific limitation on the network device or the terminal. For example, in some other embodiments of this application, the network device or the terminal may include more or fewer components than those shown in the figure, some components may be combined, or some components may be split, or different component arrangements may be used. The components shown in the figure may be implemented by using hardware, software, or a combination of software and hardware.

In some embodiments, an embodiment of this application further provides a communication apparatus. The communication apparatus includes a processor, configured to implement the method in any one of the foregoing method embodiments.

In a possible implementation, the communication apparatus further includes a memory. The memory is configured to store a necessary computer program and data. The computer program may include instructions. The processor may invoke the instructions in the computer program stored in the memory, to instruct the communication apparatus to perform the method in any one of the foregoing method embodiments. Certainly, the memory may not be in the communication apparatus.

In another possible implementation, the communication apparatus further includes an interface circuit. The interface circuit is a code/data read/write interface circuit, and the interface circuit is configured to receive computer-executable instructions (where the computer-executable instructions are stored in a memory, and may be directly read from the memory, or may be read via another component) and transmit the computer-executable instructions to a processor.

In still another possible implementation, the communication apparatus further includes a communication interface, and the communication interface is configured to communicate with a module outside the communication apparatus.

It may be understood that the communication apparatus may be a chip or a chip system. When the communication apparatus is a chip system, the communication apparatus may include a chip, or may include a chip and another discrete component. This is not specifically limited in embodiments of this application.

This application further provides a computer-readable storage medium. The computer-readable storage medium stores a computer program or instructions. When the computer program or instructions are executed by a computer, functions in any one of the foregoing method embodiments are implemented.

This application further provides a computer program product. When the computer program product is executed by a computer, functions in any one of the foregoing method embodiments are implemented.

A person of ordinary skill in the art may understand that, for the purpose of convenient and brief description, for a detailed working process of the foregoing system, apparatuses, and units, refer to a corresponding process in the foregoing method embodiments. Details are not described herein again.

It may be understood that the system, apparatuses, and methods described in this application may alternatively be implemented in another manner. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, that is, may be located at one position, or may be distributed on a plurality of network units. A component displayed as a unit may or may not be a physical unit. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

All or some of the foregoing embodiments may be implemented by using software, hardware, firmware, or any combination thereof. When a software program is used to implement the embodiments, all or some of the embodiments may be implemented in a form of a computer program product. The computer program product includes one or more computer instructions. When the computer program instructions are loaded and executed on a computer, the procedure or functions according to embodiments of this application are completely or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like. In embodiments of this application, the computer may include the foregoing apparatuses.

Although this application is described with reference to embodiments, in a process of implementing this application that claims protection, a person skilled in the art may understand and implement another variation of the disclosed embodiments by viewing the accompanying drawings, disclosed content, and appended claims. In the claims, "comprising" (comprising) does not exclude another component or another step, and "a" or "one" does not exclude a case of multiple. A single processor or another unit may implement several functions enumerated in the claims. Some measures are recorded in dependent claims that are different from each other, but this does not mean that these measures cannot be combined to produce better effect.

## Claims

1. A communication method, comprising:
generating, by a network device, first signaling indicating a first resource and a second resource, and the first resource is used to carry a first signal to be sent between a first terminal and a second terminal, and the second resource is used to carry control signaling sent by the first terminal to the second terminal, wherein the first signaling further indicates a duplex mode for communication between the first terminal and the second terminal; and
sending, by the network device, the first signaling to the first terminal, wherein the first signaling indicates the first terminal to send the first signal to the second terminal, wherein the first signaling comprises first information identifying the second terminal, and the first signal is used to provide a carrier for the second terminal.

2. The method according to claim 1,
wherein the first signaling further indicates at least one of the following: the second terminal sends a reflected signal of the first signal, and the reflected signal does not comprise information about the second terminal;
the second terminal sends a reflected signal of the first signal, and the reflected signal comprises information about the second terminal; or
the second terminal does not send a reflected signal of the first signal.

3. The method according to claims 1 or 2, further comprising:
receiving, by the network device, the reflected signal of the first signal from the second terminal; or receiving, by the network device, a second signal from the first terminal, wherein the second signal comprises the first information that identifies the second terminal.

4. A communication method, comprising:
receiving, by a first terminal, first signaling from a network device, wherein the first signaling indicates the first terminal to send a first signal to a second terminal, wheein the first signalling indicates a first resource and a second resource, and the first resource is used to carry a first signal to be sent between the first terminal and a second terminal, and the second resource is used to carry control signaling sent by the first terminal to the second terminal, wherein the first signaling further indicates a duplex mode for communication between the first terminal and the second terminal, and comprises first information identifying the second terminal;
sending, by the first terminal, second signaling to the second terminal, wherein the second signaling indicates a third resource; and
sending, by the first terminal, the first signal to the second terminal on the third resource, wherein the first signal is used to provide a carrier for the second terminal.

5. The method according to claim 4, wherein the second signaling further indicates at least one of the following:
the second terminal sends a reflected signal of the first signal, and the reflected signal does not comprise information about the second terminal;
the second terminal sends a reflected signal of the first signal, and the reflected signal comprises information about the second terminal; or
the second terminal does not send a reflected signal of the first signal.

6. The method according to claim 5, wherein when the second signaling further indicates that the second terminal sends the reflected signal of the first signal, and the reflected signal comprises the information about the second terminal, the method further comprises:
receiving, by the first terminal, the reflected signal of the first signal from the second terminal; and
determining, by the first terminal based on signal strength of the reflected signal and/or position information of the second terminal, whether to forward the reflected signal.

7. The method according to any one of claims 4 to 6, wherein there is an interval of first duration between a time domain position occupied by the second signaling and a time domain position occupied by the first signal.

8. The method according to any one of claims 4 to 7, wherein method further comprises:
determining, by the first terminal, the third resource based on the first signaling, wherein the third resource is a part or all of the first resource.

9. The method according to any one of claims 4 to 8, wherein the first signaling further indicates a resource used to carry the second signaling.

10. A communication apparatus, comprising:
means for performing the method according to any one of claims 1 to 3.

11. A communication apparatus, comprising:
means for performing the method according to any one of claims 4 to 9.

12. A computer-readable storage medium comprising instructions which, when executed by a computer, cause the computer to carry out the method according to any one of claims 1 to 3, or cause the computer to carry out the method according to any one of claims 4 to 9.

## Patentansprüche

1. Kommunikationsverfahren, das umfasst:
Erzeugen, durch eine Netzwerkvorrichtung, einer ersten Signalisierung, die eine erste Ressource und eine zweite Ressource angibt, und wobei die erste Ressource verwendet wird, um ein erstes Signal zu übertragen, das zwischen einem ersten Endgerät und einem zweiten Endgerät gesendet werden soll, und wobei die zweite Ressource verwendet wird,
um eine Steuersignalisierung zu übertragen, die von dem ersten Endgerät an das zweite Endgerät gesendet wird, wobei die erste Signalisierung ferner einen Duplexmodus für eine Kommunikation zwischen dem ersten Endgerät und dem zweiten Endgerät angibt; und
Senden, durch die Netzwerkvorrichtung, der ersten Signalisierung an das erste Endgerät, wobei die erste Signalisierung dem ersten Endgerät angibt, das erste Signal an das zweite Endgerät zu senden, wobei die erste Signalisierung erste Informationen umfasst, die das zweite Endgerät identifizieren, und das erste Signal verwendet wird, um einen Träger für das zweite Endgerät bereitzustellen.

2. Verfahren nach Anspruch 1, wobei die erste Signalisierung ferner mindestens eines von Folgendem angibt: das zweite Endgerät sendet ein reflektiertes Signal des ersten Signals, und das reflektierte Signal umfasst keine Informationen über das zweite Endgerät;
das zweite Endgerät sendet ein reflektiertes Signal des ersten Signals, und das reflektierte Signal umfasst Informationen über das zweite Endgerät; oder
das zweite Endgerät sendet kein reflektiertes Signal des ersten Signals.

3. Verfahren nach Anspruch 1 oder 2, das ferner umfasst:
Empfangen, durch die Netzwerkvorrichtung, des reflektierten Signals des ersten Signals von dem zweiten Endgerät; oder Empfangen, durch die Netzwerkvorrichtung, eines zweiten Signals von dem ersten Endgerät, wobei das zweite Signal die ersten Informationen umfasst, die das zweite Endgerät identifizieren.

4. Kommunikationsverfahren, das umfasst:
Empfangen, durch ein erstes Endgerät, einer ersten Signalisierung von einer Netzwerkvorrichtung, wobei die erste Signalisierung dem ersten Endgerät angibt, ein erstes Signal an ein zweites Endgerät zu senden, wobei die erste Signalisierung eine erste Ressource und eine zweite Ressource angibt, und die erste Ressource verwendet wird, um ein erstes Signal zu übertragen, das zwischen dem ersten Endgerät und einem zweiten Endgerät gesendet werden soll, und die zweite Ressource verwendet wird, um eine Steuersignalisierung zu übertragen, die von dem ersten Endgerät an das zweite Endgerät gesendet wird, wobei die erste Signalisierung ferner einen Duplexmodus für eine Kommunikation zwischen dem ersten Endgerät und dem zweiten Endgerät angibt und erste Informationen umfasst, die das zweite Endgerät identifizieren;
Senden, durch das erste Endgerät, einer zweiten Signalisierung an das zweite Endgerät, wobei die zweite Signalisierung eine dritte Ressource angibt; und
Senden, durch das erste Endgerät, des ersten Signals an das zweite Endgerät auf der dritten Ressource, wobei das erste Signal verwendet wird, um einen Träger für das zweite Endgerät bereitzustellen.

5. Verfahren nach Anspruch 4, wobei die zweite Signalisierung ferner mindestens eines von Folgendem angibt:
das zweite Endgerät sendet ein reflektiertes Signal des ersten Signals, und das reflektierte Signal umfasst keine Informationen über das zweite Endgerät;
das zweite Endgerät sendet ein reflektiertes Signal des ersten Signals, und das reflektierte Signal umfasst Informationen über das zweite Endgerät; oder
das zweite Endgerät sendet kein reflektiertes Signal des ersten Signals.

6. Verfahren nach Anspruch 5, wobei, wenn die zweite Signalisierung ferner angibt, dass das zweite Endgerät das reflektierte Signal des ersten Signals sendet, und das reflektierte Signal die Informationen über das zweite Endgerät umfasst, das Verfahren ferner umfasst:
Empfangen, durch das erste Endgerät, des reflektierten Signals des ersten Signals von dem zweiten Endgerät; und
Bestimmen, durch das erste Endgerät basierend auf der Signalstärke des reflektierten Signals und/oder Positionsinformationen des zweiten Endgeräts, ob das reflektierte Signal weitergeleitet werden soll.

7. Verfahren nach einem der Ansprüche 4 bis 6, wobei zwischen einer durch die zweite Signalisierung eingenommenen Zeitbereichsposition und einer durch das erste Signal eingenommenen Zeitbereichsposition ein Intervall erster Dauer besteht.

8. Verfahren nach einem der Ansprüche 4 bis 7, wobei das Verfahren ferner umfasst:
Bestimmen, durch das erste Endgerät, der dritten Ressource basierend auf der ersten Signalisierung, wobei die dritte Ressource ein Teil oder die Gesamtheit der ersten Ressource ist.

9. Verfahren nach einem der Ansprüche 4 bis 8, wobei die erste Signalisierung ferner eine Ressource angibt, die verwendet wird, um die zweite Signalisierung zu übertragen.

10. Kommunikationseinrichtung, die umfasst:
Mittel zum Durchführen des Verfahrens nach einem der Ansprüche 1 bis 3.

11. Kommunikationseinrichtung, die umfasst:
Mittel zum Durchführen des Verfahrens nach einem der Ansprüche 4 bis 9.

12. Computerlesbares Speichermedium, das Anweisungen umfasst, die, wenn sie durch einen Computer ausgeführt werden, den Computer veranlassen, das Verfahren nach einem der Ansprüche 1 bis 3 auszuführen, oder den Computer veranlassen, das Verfahren nach einem der Ansprüche 4 bis 9 auszuführen.

## Revendications

1. Procédé de communication, comprenant :
la génération, par un dispositif de réseau, d'une première signalisation indiquant une première ressource et une deuxième ressource, et la première ressource est utilisée pour transporter un premier signal à envoyer entre un premier terminal et un second terminal, et la deuxième ressource est utilisée pour transporter une signalisation de commande envoyée par le premier terminal au second terminal, dans lequel la première signalisation indique en outre un mode duplex pour une communication entre le premier terminal et le second terminal ; et
l'envoi, par le dispositif de réseau, de la première signalisation au premier terminal, dans lequel la première signalisation indique au premier terminal d'envoyer le premier signal au second terminal, dans lequel la première signalisation comprend des premières informations identifiant le second terminal, et le premier signal est utilisé pour fournir une porteuse pour le second terminal.

2. Procédé selon la revendication 1, dans lequel la première signalisation indique en outre au moins l'un de ce qui suit : le second terminal envoie un signal réfléchi du premier signal, et le signal réfléchi ne comprend pas d'informations concernant le second terminal ;
le second terminal envoie un signal réfléchi du premier signal, et le signal réfléchi comprend des informations concernant le second terminal ; ou
le second terminal n'envoie pas de signal réfléchi du premier signal.

3. Procédé selon la revendication 1 ou 2, comprenant en outre :
la réception, par le dispositif de réseau, du signal réfléchi du premier signal en provenance du second terminal ; ou la réception, par le dispositif de réseau, d'un second signal en provenance du premier terminal, dans lequel le second signal comprend les premières informations qui identifient le second terminal.

4. Procédé de communication, comprenant :
la réception, par un premier terminal, d'une première signalisation en provenance d'un dispositif de réseau, dans lequel la première signalisation indique au premier terminal d'envoyer un premier signal à un second terminal, dans lequel la première signalisation indique une première ressource et une deuxième ressource, et la première ressource est utilisée pour transporter un premier signal à envoyer entre le premier terminal et un second terminal, et la deuxième ressource est utilisée pour transporter une signalisation de commande envoyée par le premier terminal au second terminal, dans lequel la première signalisation indique en outre un mode duplex pour une communication entre le premier terminal et le second terminal, et comprend des premières informations identifiant le second terminal ;
l'envoi, par le premier terminal, d'une seconde signalisation au second terminal, dans lequel la seconde signalisation indique une troisième ressource ; et
l'envoi, par le premier terminal, du premier signal au second terminal sur la troisième ressource, dans lequel le premier signal est utilisé pour fournir une porteuse pour le second terminal.

5. Procédé selon la revendication 4, dans lequel la seconde signalisation indique en outre au moins l'un de ce qui suit :
le second terminal envoie un signal réfléchi du premier signal, et le signal réfléchi ne comprend pas d'informations concernant le second terminal ;
le second terminal envoie un signal réfléchi du premier signal, et le signal réfléchi comprend des informations concernant le second terminal ; ou
le second terminal n'envoie pas de signal réfléchi du premier signal.

6. Procédé selon la revendication 5, dans lequel, lorsque la seconde signalisation indique en outre que le second terminal envoie le signal réfléchi du premier signal, et que le signal réfléchi comprend les informations concernant le second terminal, le procédé comprend en outre :
la réception, par le premier terminal, du signal réfléchi du premier signal en provenance du second terminal ; et
le fait de déterminer, par le premier terminal sur la base d'une intensité de signal du signal réfléchi et/ou d'informations de position du second terminal, s'il faut transférer le signal réfléchi.

7. Procédé selon l'une quelconque des revendications 4 à 6, dans lequel il existe un intervalle de première durée entre une position dans le domaine temporel occupée par la seconde signalisation et une position dans le domaine temporel occupée par le premier signal.

8. Procédé selon l'une quelconque des revendications 4 à 7, dans lequel le procédé comprend en outre :
la détermination, par le premier terminal, de la troisième ressource sur la base de la première signalisation, dans lequel la troisième ressource est une partie ou la totalité de la première ressource.

9. Procédé selon l'une quelconque des revendications 4 à 8, dans lequel la première signalisation indique en outre une ressource utilisée pour transporter la seconde signalisation.

10. Appareil de communication, comprenant :
un moyen permettant de réaliser le procédé selon l'une quelconque des revendications 1 à 3.

11. Appareil de communication, comprenant :
un moyen permettant de réaliser le procédé selon l'une quelconque des revendications 4 à 9.

12. Support de stockage lisible par ordinateur comprenant des instructions qui, lorsqu'elles sont exécutées par un ordinateur, amènent l'ordinateur à mettre en œuvre le procédé selon l'une quelconque des revendications 1 à 3, ou amènent l'ordinateur à mettre en œuvre le procédé selon l'une quelconque des revendications 4 à 9.
